# EUROPEAN PATENT APPLICATION

(11) **EP 4 513 630 A1**
(43) Date of publication of application: **26.02.2025**
(21) Application number: 23792034.3
(22) Date of filing: 17.03.2023
(51) Int. Cl.: H01M 10/6553, H01M 10/667, H01M 10/6556, H01M 10/653, H01M 10/651, H01M 10/6551, H01M 10/613, H01M 10/625, H01M 50/502, H01M 50/574

(54) **COOLING MODULE AND BATTERY DISCONNECT DEVICE COMPRISING SAME**

(30) Priority: 18.04.2022 KR 20220047349
(71) Applicant: LS Electric Co., Ltd., Gyeonggi-do 14119 (KR)
(72) Inventor: KIM, Jaeseop, Anyang-si Gyeonggi-do 14118 (KR)
(74) Representative: K&L Gates LLP
(86) International application number: PCT/KR2023/003570
(87) International publication number: WO 2023/204454

(57) **Abstract**

A cooling module is disclosed. A cooling module according to an aspect of the present invention comprises a heat dissipation part which is coupled to an external busbar and receives heat from the busbar, and a pipe part which is coupled to the heat dissipation part and inside which a heat transfer medium that receives the heat flows, wherein the heat dissipation part may comprise: a heat dissipation body formed to extend in one direction; a pipe coupling part which extends along the one direction inside the heat dissipation body and of which each end in the one direction is formed to be open so that the pipe part is coupled by penetrating therethrough; and a busbar coupling part which is positioned adjacent to the pipe coupling part and to which the busbar is coupled.

## Description

### Technical field

The present disclosure relates to a cooling module and a battery disconnect device including the same, and more particularly, to a cooling module and a battery disconnect device with a structure that is simply assembled and has improved cooling efficiency.

### Background Art

The trend toward sanctions against the use of fossil fuels to combat climate change continues. This trend is affecting not only a power generation field to produce electricity, but also daily life.

Accordingly, beyond the related art vehicle in which power is generated using fossil fuels such as gasoline or diesel, researches on vehicles, such as electric vehicles (EVs), hybrid electric vehicle (HEVs), and hydrogen vehicle (HVs), which are driven by using electricity or hydrogen, are actively proceeding.

EVs, HEVs, HVs, etc. as described above are essentially equipped with batteries which supply electricity to drive the vehicles. As a vehicle and a battery that drives the vehicle continue to operate, high heat is generated in a battery disconnect unit (BDU), which is densely packed with the battery and devices for opening and closing the battery and loads, for example, switches, etc. If the generated high heat is left as it is, there is a possibility that the battery, the BDU, or various components disposed in the vehicle may be damaged.

Therefore, compared to vehicles with traditional structures, that is, vehicles driven by fossil fuels, the need for effective heat dissipation of batteries increases for EVs, HEVs, HVs, etc.

Widely used methods for cooling batteries may be classified into air cooling and water cooling. In the case of the related art vehicle using fossil fuels, an amount of heat generated from a battery is not excessive, so sufficient cooling efficiency can be expected merely by air cooling. On the other hand, EVs, HEVs, HVs, etc. having batteries that emit high heat generally adopt water cooling because it is difficult to cool such batteries sufficiently with air cooling alone.

However, when cooling a battery in a water cooling manner, a flow path along which a heat transfer medium, that is, water serving to transfer heat of the battery flows must be completely physically separated from the battery. In other words, the flow path must allow water to flow inside, but communication between the flow path and outside must be blocked.

Therefore, in order to cool the battery in the water cooling manner, additional members, such as a rubber ring to suppress random leakage of water, and the like, are required. This causes an increase in unit price of a product and a decrease in assembly property.

Korean Patent Registration No. 10-1971884 discloses a cooling pad and an electric vehicle using the same. Specifically, the patent document discloses a cooling pad capable of cooling an external heat source by receiving refrigerant from a cooling system of an electric vehicle, and an electric vehicle using the same.

However, the cooling pad and the electric vehicle using the same disclosed in the prior art document merely provide a method for cooling the external heat source using a refrigerant, assuming that the refrigerant is supplied. In other words, the prior art document does not suggest a method for suppressing leakage of flowing refrigerant and simplifying a structure for this.

Korean Patent Application Publication No. 10-2012-0129076 discloses a cooling system for an electric vehicle. Specifically, a cooling system for an electric vehicle is disclosed to achieve miniaturization and weight reduction of a cooling module package by simplifying a cooling passage through improvement of disposition between devices.

However, the cooling system for the electric vehicle disclosed in the prior art document also discloses only a method for changing the way that the cooling passage extends. In other words, the prior art document also fails to suggest a method for improving cooling efficiency while reducing the number of members to form the cooling passage.

### Disclosure of the Invention

### Technical Problem

The present disclosure is to address the above problems, and an aspect of the present disclosure is to provide a cooling module with a structure having improved cooling efficiency, and a battery disconnect device including the same.

Another aspect of the present disclosure is to provide a cooling module with a structure that is capable of stably ensuring electrical insulation from electrical devices coupled thereto, and a battery disconnect device including the same.

Still another aspect of the present disclosure is to provide a cooling module with a structure that is capable of improving manufacturing efficiency, and a battery disconnect device including the same.

Another aspect of the present disclosure is to provide a cooling module with a structure that is capable of suppressing loss of cooling medium, and a battery disconnect device including the same.

Another aspect of the present disclosure is to provide a cooling module with a structure that is applicable to electrical devices of various sizes, and a battery disconnect device including the same.

The problems to be solved in the present disclosure may not be limited to the aforementioned, and other problems to be solved by the present disclosure, which are not mentioned, will be obviously understood by a person skilled in the art based on the following description.

### Solution to problem

According to one aspect of the present disclosure, there is provided a cooling module that includes: a heat dissipation part that is coupled to an external busbar and receives heat from the busbar; and a pipe part that is coupled to the heat dissipation part and in which a heat transfer medium receiving the heat flows, wherein the heat dissipation part includes: a heat dissipation body that extends in one direction; a pipe coupling portion that extends along the one direction inside the heat dissipation body, and has each end portion in the one direction open such that the pipe part is coupled therethrough; and a busbar coupling portion that is located adjacent to the pipe coupling portion and to which the busbar is coupled.

At this time, there may be provided the cooling module in which the heat dissipation part is made of thermal conductive plastic or thermal conductive rubber.

Also, there may be provided the cooling module in which the heat dissipation part is formed of a material having thermal conductivity of 0.5 W/mK or more.

At this time, there may be provided the cooling module in which the heat dissipation part is formed of a material having thermal conductivity of 2.0 W/mK or more.

Also, there may be provided the cooling module in which the heat dissipation part and the pipe part are manufactured by insert-molding.

At this time, there may be provided the cooling module in which the heat dissipation part comprises a fin member that is located on one side of the heat dissipation body to be opposite to the busbar coupling portion, and protrudes externally to increase a surface area.

Also, there may be provided the cooling module, in which the fin member is provided in plurality, and the plurality of fin members are disposed to be spaced apart from one another in the one direction.

At this time, there may be provided the cooling module in which the pipe part is formed such that a shape of a cross-section of each end portion in an extending direction thereof is different from a shape of a cross-section of a portion between the end portions, and the end portions are exposed to outside of the heat dissipation body while the portion between the end portions is accommodated in the pipe coupling portion.

In addition, there may be provided the cooling module in which the shape of the cross-section of each end portion of the pipe part is circular, and the shape of the cross-section of the portion between the end portions is formed in a plate shape with a thickness smaller than a diameter of the cross-section of each end portion.

At this time, there may be provided the cooling module in which the pipe part is formed such that an area of an outer peripheral surface of each end portion in an extending direction thereof is smaller than an area of an outer peripheral surface of a portion between the end portions, and the end portions are exposed to outside of the heat dissipation body while the portion between the end portions is accommodated in the pipe coupling portion.

In addition, there may be provided the cooling module that further includes a heat transfer part that is coupled to each of the heat dissipation part and the pipe part and is configured to exchange heat with the heat dissipation part and the pipe part, and in which the heat dissipation part includes a transfer coupling portion that extends along the one direction inside the heat dissipation body, is located between the busbar coupling portion and the pipe coupling portion, and accommodates the heat transfer part.

At this time, there may be provided the cooling module in which the heat transfer part includes: a transfer body that extends along the one direction and is in contact with the heat dissipation body to exchange heat; and a pipe accommodating portion that is recessed in one surface of the transfer body and extends along the one direction to accommodate the pipe part, and the pipe part is in contact with a surface, surrounding the pipe accommodating portion, of surfaces of the transfer body, so as to exchange heat.

Additionally, according to one aspect of the present disclosure, there is provided a cooling module that includes: a heat dissipation part that is coupled to an external busbar and receives heat from the busbar; and a pipe part that is coupled to the heat dissipation part and in which a heat transfer medium receiving the heat flows, wherein the heat dissipation part includes: a heat dissipation body that extends in one direction to surround one side of the pipe part; a pipe coupling portion that is located on one surface of the heat dissipation body, extends along the one direction by a length shorter than the heat dissipation body, and surrounds another side of the pipe part; and a heat dissipation opening that is formed through the pipe coupling portion to form a passage through which the pipe part is exposed to outside.

At this time, there may be provided the cooling module in which the pipe coupling portion is provided in plurality, the plurality of pipe coupling portions are disposed to be spaced apart from one another along the one direction, and the heat dissipation opening is further formed between a pair of pipe coupling portions, located adjacent to each other, among the plurality of pipe coupling portions.

In addition, according to one aspect of the present disclosure, there is provided a battery disconnect device that includes: a plurality of contactors each of which is electrically connected to an external power source and an external load and that are disposed side by side in one direction; a plurality of busbars that are electrically connected to the plurality of contactors, respectively; a heat dissipation part that is coupled to the plurality of busbars and receives heat from the busbars; and a pipe part that is coupled to the heat dissipation part and in which a heat transfer medium receiving the heat flows, wherein the heat dissipation part includes: a heat dissipation body that extends in the one direction; a pipe coupling portion that extends along the one direction inside the heat dissipation body, and has each end portion in the one direction open such that the pipe part is coupled therethrough; and a plurality of busbar coupling portions that are formed on the heat dissipation body, and located adjacent to the pipe coupling portion, and to which the plurality of the busbars are coupled.

At this time, there may be provided a battery disconnect device in which the external power source is a battery disposed in an electric vehicle.

### Advantageous Effects of the Invention

According to the configuration, cooling efficiency of a cooling module and a battery disconnect device including the same according to an embodiment of the present disclosure can be improved.

First, the cooling module includes a heat dissipation part made of a thermally conductive plastic material or a thermally conductive rubber material. The heat dissipation part is located adjacent to a busbar to receive heat generated from the busbar.

A pipe part through which a heat transfer medium flows is coupled to the heat dissipation part. The pipe part may communicate with outside so that a low-temperature heat transfer medium can be introduced therein. In addition, the pipe part may communicate with the outside such that high-temperature heat transfer medium that has received generated heat can flow out.

In one embodiment, the heat transfer medium may be water, which has a higher heat capacity than air. In the embodiment, the cooling module may be configured to cool the configuration of the battery disconnect device by water cooling.

In one embodiment, the heat dissipation part may include a fin member. The fin member is configured to increase an area of an outer surface of the heat dissipation part. The heat transferred to the heat dissipation part may partially be discharged to the outside through the fin member.

In one embodiment, a heat transfer part that is coupled to the pipe part and exchanges heat may be provided. The heat transfer part is made of a material with high thermal conductivity, receives heat generated from the busbar, and transfers the received heat to the pipe part.

Therefore, the heat generated from the busbar can be transferred to each component of the cooling module through various paths and then dissipated to the outside. Accordingly, the cooling efficiency of an external electrical device to which the cooling module is coupled can be improved.

In addition, according to the configuration, electrical insulation can be stably secured between the cooling module and the battery disconnect device including the same according to an embodiment of the present disclosure and the electrical device.

The cooling module is in contact with the busbar through the heat dissipation part. The heat dissipation part is made of a thermally conductive plastic material or a thermally conductive rubber material, and is formed to have high thermal conductivity and electrical insulation. In other words, the heat dissipation part is configured to effectively receive heat from the contacted busbars, but to block an electrical connection between the plurality of contacted busbars.

Accordingly, even if an additional configuration for blocking the electrical connection between the plurality of busbars is not provided, electrical insulation can be stably secured by the heat dissipation part.

Also, according to the configuration, manufacturing efficiency of the cooling module and the battery disconnect device including the same according to an embodiment of the present disclosure can be improved.

In one embodiment, each component of the cooling module may be coupled by way of insert-molding. Accordingly, separate members for coupling components are not required. Furthermore, any work is not required to individually couple the separate members.

Accordingly, the manufacturing cost of the cooling module can be reduced, and work efficiency and assembly property can be improved.

Also, according to the configuration, loss of a medium for cooling the cooling module and the battery disconnect device including the same according to an embodiment of the present disclosure can be suppressed.

As described above, each component of the cooling module can be coupled by insert-molding. In one embodiment, after disposition of the pipe part or the pipe part and the heat transfer part, a material forming the heat dissipation part may be insert-molded to manufacture the cooling module.

Therefore, each component of the cooling module, that is, the heat dissipation part, the pipe part, and the heat transfer part, may be coupled in close contact with each other. Accordingly, airtightness between the pipe part and other components can be ensured, thereby suppressing arbitrary leakage of the heat transfer medium.

Additionally, according to the configuration, the cooling module and the battery disconnect device including the same according to an embodiment of the present disclosure can be applied to electrical devices of various sizes.

In one embodiment, the cooling module may be configured to include all of the heat dissipation part, the pipe part, and the heat transfer part. In the embodiment, the cooling efficiency of the cooling module can be maximized.

In another embodiment, the cooling module may include the heat dissipation part and the pipe part. At this time, the volume of the cooling module can be reduced by a volume corresponding to a space occupied by the heat transfer part.

In another embodiment, the pipe part may be formed so that a portion accommodated in the heat dissipation part is flat. That is, in the embodiment, a thickness of the pipe part can be reduced, and a thickness of the heat dissipation part for accommodating the pipe part can also be reduced.

Therefore, the cooling module can be modified into various forms according to the size or situation of a device to be cooled. This can improve design freedom and application freedom.

The effects of the present disclosure are not limited to those described above, and should be understood to include all effects that can be inferred from the configuration of the invention described in the detailed description or claims of the present disclosure.

### Brief Description of Drawings

FIG. 1 is a perspective view illustrating a battery disconnect device according to one embodiment of the present disclosure.
FIG. 2 is an exploded perspective view illustrating a power supply interruption unit and a cooling module disposed in the battery disconnect device of FIG. 1.
FIG. 3 is a perspective view illustrating a cooling module disposed in the battery disconnect device of FIG. 1.
FIG. 4 is an exploded perspective view illustrating the configuration of the cooling module of FIG. 3.
FIG. 5 is a perspective view illustrating a cooling module according to another embodiment of the present disclosure.
FIG. 6 is an exploded perspective view illustrating the configuration of the cooling module of FIG. 5.
FIG. 7 is a perspective view illustrating a cooling module according to still another embodiment of the present disclosure.
FIG. 8 is an exploded perspective view illustrating the configuration of the cooling module of FIG. 7.
FIG. 9 is a perspective view illustrating a cooling module according to yet another embodiment of the present disclosure.
FIG. 10 is an exploded perspective view illustrating the configuration of the cooling module of FIG. 9.

### Mode for the Invention

Hereinafter, an embodiment of the present disclosure will be described in detail with reference to the accompanying drawings, so as to be easily implemented by those skilled in the art. The present disclosure may be implemented in many different forms and is not limited to the embodiment described herein. In order to clearly explain the present disclosure, parts not related to the description have been omitted in the drawings, and the same or equivalent components are given the same reference numerals throughout the specification.

The words and terms used in this specification and claims are not to be construed as limited in their usual or dictionary meanings, but should be interpreted with meaning and concepts consistent with the technical idea of the present disclosure according to the principle that the inventor can define terms and concepts in order to explain his or her invention in the best way.

Therefore, the embodiment described in the disclosure and the configuration illustrated in the drawings correspond to a preferred embodiment of the disclosure, and do not represent all of the technical ideas of the disclosure, so the corresponding configuration may be replaced with various equivalents and modified examples at the time that the present disclosure is filed.

In the following description, a description of some components will be omitted to clarify features of the present disclosure.

### 1. Definition of Terms

The term "communication" used in the following description means that one or more members communicate with each other so that a fluid can flow therethrough. In one embodiment, the communication may be implemented by a member such as a conduit, pipe, or piping.

The term "electrical connection or current application" used in the following description refers to that one or more members are connected such that current or an electrical signal can be transmitted therebetween. In one embodiment, the electrical connection may be made in a wired form using a conductor member, or in a wireless form such as Bluetooth, Wi-Fi, or RFID.

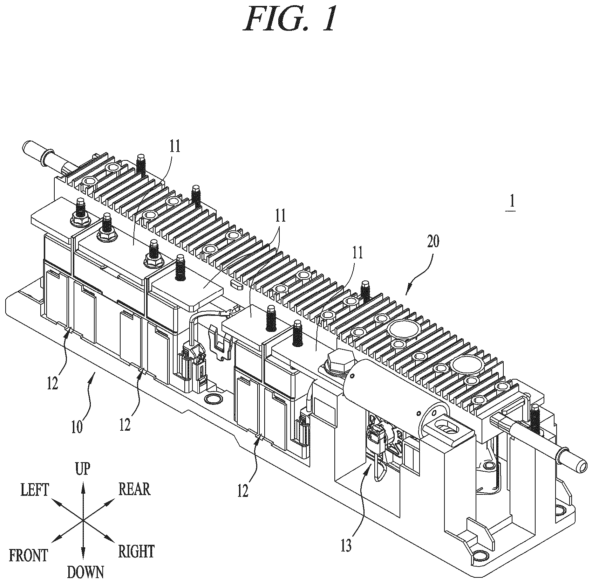

Terms "top, up, or upper," "bottom, down, or lower," "left," "right," "front," and "rear" used in the following description will be understood based on a coordinate system illustrated in FIGS. 1, 3, 5, 7, and 9.

### 2. Description of configuration of battery disconnect device 1 according to embodiment

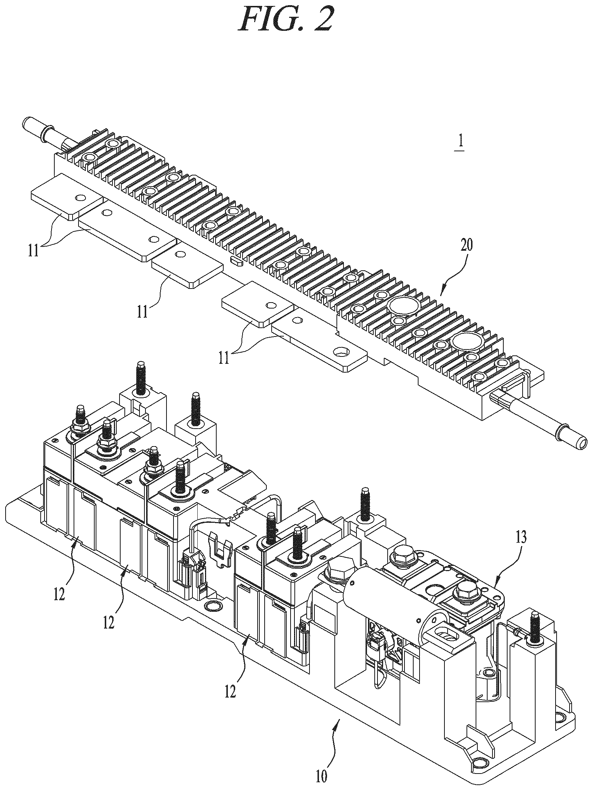

Referring to FIGS. 1 and 2, a battery disconnect device 1 according to an embodiment of the present disclosure is illustrated. The battery disconnect device 1 may be disposed in any vehicle equipped with a battery (not illustrated), such as an EV, HEV, plug-in hybrid electric Vehicle (PHEV), or HV. Alternatively, the battery disconnect device 1 may be disposed in any power device equipped with a battery, for example, an energy storage system (ESS).

The battery disconnect device 1 may be provided in any form that can allow or block an electrical connection between the battery (not illustrated) and a load. In one embodiment, the battery disconnect device 1 may be disposed as a battery disconnect unit (BDU).

In the illustrated embodiment, the battery disconnect device 1 includes a power supply interruption unit 10 and a cooling module 20.

The power supply interruption unit 10 is configured to be electrically connected to the battery (not illustrated) and other components disposed in the vehicle, to allow or block an electrical connection between the battery (not illustrated) and the other components.

As the battery disconnect device 1 operates, high heat may be generated in the battery (not illustrated) and various components of the power supply interruption unit 10. Accordingly, the cooling module 20 may be coupled to the power supply interruption unit 10 to receive heat generated from the power supply interruption unit 10. Accordingly, each component of the power supply interruption unit 10 can be cooled and overheating of the power supply interruption unit 10 can be suppressed.

In the illustrated embodiment, the power supply interruption unit 10 is coupled to the cooling module 20 according to one embodiment of the present disclosure. Although not illustrated, it will be understood that the power supply interruption unit 10 may be coupled to any one of cooling modules 30, 40, and 50 according to respective embodiments to be described later to constitute the battery disconnect device 1.

In the illustrated embodiment, the power supply interruption unit 10 includes a busbar 11, a contactor 12, and a fuse 13.

The busbar 11 is coupled and electrically connected to the contactor 12 such that an external battery and other components disposed in the vehicle are electrically connected to each other. The busbar 11 and the contactor 12 may be provided in plurality, and the plurality of busbars 11 and the plurality of contactors 12 may be coupled and electrically connected to each other, respectively.

At this time, electrical conduction between the plurality of busbars 11 is blocked. Accordingly, electrical connection between the plurality of contactors 12 is also blocked. As will be described later, portions of the cooling module 20, 30, 40, 50 that are in contact with the plurality of busbars 11 may be formed of an electrically insulating material to suppress arbitrary electrical connection between the plurality of busbars 11.

The fuse 13 is located adjacent to the plurality of contactors 12.

The fuse 13 is configured to blow when overcurrent is applied. Accordingly, electrical connection between the battery (not illustrated) and other components of the vehicle can be blocked, thereby suppressing accidents due to the overcurrent.

The fuse 13 may be coupled and electrically connected to any one or more of the plurality of contactors 12. That is, the busbar 11 and the contactor 12 are each electrically connected to the battery (not illustrated) and other components of the vehicle through the fuse 13.

The configuration in which the plurality of busbars 11 and the plurality of contactors 12 are coupled and electrically connected to each other, respectively, and a process in which the fuse 13 is blown such that they are electrically disconnected are well-known techniques, so a detailed description thereof will be omitted.

### 3. Description of cooling module 20 according to embodiment

Referring back to FIGS. 1 and 2, the battery disconnect device 1 according to an embodiment of the present disclosure includes a cooling module 20.

The cooling module 20 is coupled to the power supply interruption unit 10 and receives heat (hereinafter, referred to as "generated heat") which has been generated from the battery (not illustrated) and transferred to the power supply interruption unit 10 or heat which has been generated from the power supply interruption unit 10. The received heat (generated heat) is discharged to the outside of the battery disconnect device 1 through a heat transfer medium that flows inside the cooling module 20. Accordingly, each component of the power supply interruption unit 10 and the battery (not illustrated) coupled and electrically connected to the power supply interruption unit 10 can be cooled.

The heat transfer medium may flow inside the cooling module 20. In one embodiment, the heat transfer medium may be gas or liquid. In one embodiment, the heat transfer medium may be water. In the embodiment, it can be said that the cooling module 20 is configured to cool the power supply interruption unit 10 in a water cooling manner.

The cooling module 20 may be coupled to the power supply interruption unit 10 in any form capable of receiving generated heat and discharging the same to the outside of the battery disconnect device 1. In the illustrated embodiment, the cooling module 20 is coupled to the power supply interruption unit 10 on the top of the power supply interruption unit 10 while covering the components of the power supply interruption unit 10.

The cooling module 20 may be formed in any shape that is coupled to the power supply interruption unit 10 and receives and discharges generated heat. In the illustrated embodiment, the cooling module 20 has a rectangular pillar shape that extends long in a left-to-right direction, has a width in a front-to-rear direction, and has a thickness in a vertical (up-to-down) direction. It will be understood that the shape of the cooling module 20 may change to correspond to the shape of the power supply interruption unit 10.

The cooling module 20 communicates with the outside. The heat transfer medium for receiving the generated heat may be introduced into the cooling module 20 from the outside. Additionally, the heat transfer medium that receives the generated heat may be discharged to the outside.

Among portions of the cooling module 20, one side facing the power supply interruption unit 10, namely, a lower portion in the illustrated embodiment may be in contact with the busbars 11. Referring to FIG. 2, the lower portion of the cooling module 20 may be coupled to the busbars 11.

Accordingly, it will be understood that the lower portion of the cooling module 20 and the busbars 11 may exchange heat by conduction. Accordingly, the generated heat can be effectively transferred from the busbars 11 to the cooling module 20.

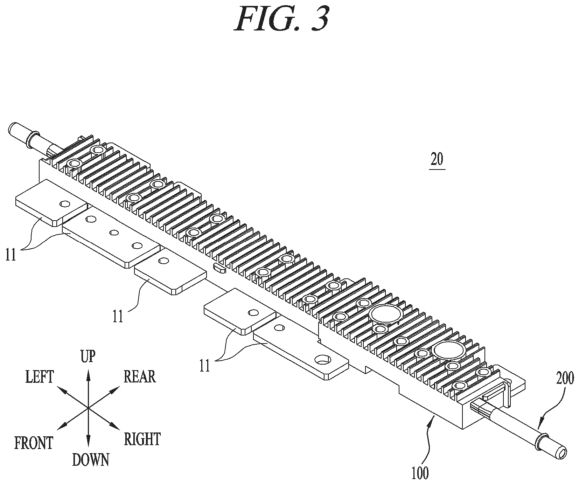

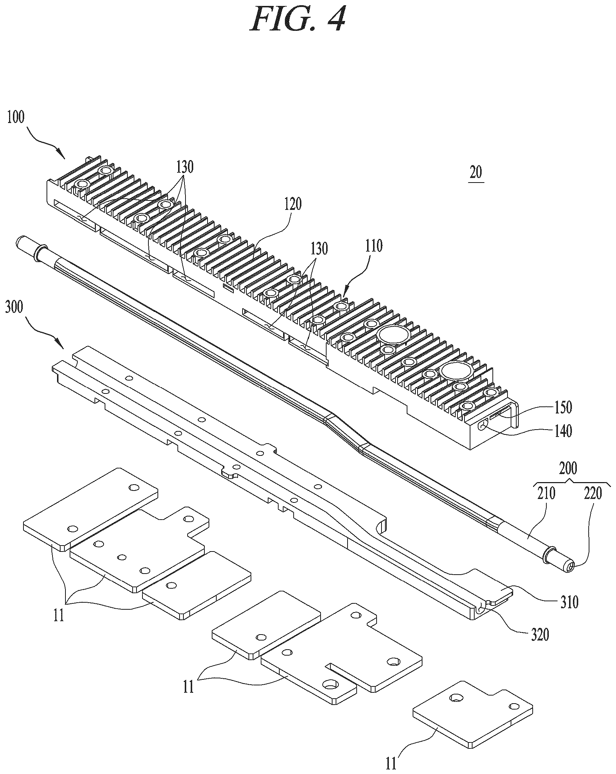

In the embodiment illustrated in FIGS. 3 and 4, the cooling module 20 includes a heat dissipation part 100, a pipe part 200, and a heat transfer part 300.

The heat dissipation part 100 is coupled to the busbars 11 and receives heat generated from the busbars 11. Additionally, the heat dissipation part 100 is coupled to the pipe part 200 and transfers the received heat to the pipe part 200 and a heat transfer medium flowing within the pipe part 200.

The heat dissipation part 100 is coupled to the pipe part 200. A space (a pipe coupling portion (or pipe coupling part) 140 to be described later) may be formed inside the heat dissipation part 100, so that the pipe part 200 can be accommodated in communication with the outside.

The heat dissipation part 100 is coupled to the heat transfer part 300. A space (a transfer coupling portion 150 to be described later) may be formed inside the heat dissipation part 100, so that the heat transfer part 300 can be accommodated.

The heat dissipation part 100 may be formed in a shape corresponding to the shape of the cooling module 20. In the illustrated embodiment, the heat dissipation part 100 has a rectangular pillar shape with a length in the left-to-right direction, a width in the front-to-rear direction, and a thickness in the vertical direction. It will be understood that the shape of the heat dissipation part 100 may change to correspond to the shape of the power supply interruption unit 10.

The heat dissipation part 100 may be formed of an electrically insulating material. The heat dissipation part 100 is coupled to the plurality of busbars 11 and is intended to block random electrical connection between the plurality of busbars 11 coupled thereto.

The heat dissipation part 100 may be formed of a material with high thermal conductivity. This is because the heat dissipation part 100 is coupled to the plurality of busbars 11 to receive generated heat and transfer it to the pipe part 200. In one embodiment, the heat dissipation part 100 may be formed of a material having thermal conductivity of 0.5 W/mK or more. Preferably, the heat dissipation part 100 may be formed of a material having thermal conductivity of 2.0 W/mK or more.

In any case, it is sufficient as long as thermal conductivity can be more improved than that in the case where the heat dissipation part 100 is formed of a typical synthetic resin material.

In one embodiment, the heat dissipation part 100 may be made by mixing a material, which can provide electrical insulating property and thermal conductivity with synthetic resin, such as polyphenylene sulfide (PPS), polycarbonate (PC), polyamide (PA), polybutylene terephthalate (PBT), liquid crystal polymer (LCP), or the like, which has excellent heat resistance.

In one embodiment, the material may include ceramic-based fillers such as boron nitride (BN), aluminum nitride (AIN), silicon carbide (SiC), magnesium oxide (MgO), and aluminum oxide (Al2O3).

In one embodiment, the heat dissipation part 100 may be formed of a thermal conductive plastic or thermal conductive rubber material.

At this time, the heat dissipation part 100, the pipe part 200, and the heat transfer part 300 may be coupled together through a single process. In an embodiment in which the heat dissipation part 100 is formed of a material including synthetic resin, after the disposition of the pipe part 200 and the heat transfer part 300 is completed, a material forming the heat dissipation part 100 may be molded to form the cooling module 20.

That is, in the above embodiment, the cooling module 20 may be manufactured by insert molding.

Furthermore, the heat dissipation part 100, the pipe part 200, and the heat transfer part 300 may be coupled in close contact with one another, thereby improving airtightness and heat transfer efficiency.

Additionally, the pipe part 200 is kept coupled to the heat dissipation part 100 and the heat transfer part 300, and the heat transfer medium flows only inside the pipe part 200. Therefore, no separate configuration is required to suppress random leakage of the heat transfer medium.

This can result in simplifying the structure of the cooling module 20 and improving cooling efficiency by the heat transfer medium.

In the illustrated embodiment, the heat dissipation part 100 includes a heat dissipation body 110, a fin member 120, a busbar coupling portion130, a pipe coupling portion 140, and a transfer coupling portion 150.

As described above, the cooling module 20 may be manufactured by insert-molding. In the embodiment, no separate configurations are required to couple the pipe part 200 and the heat transfer part 300 to the heat dissipation part 100 and maintain the coupled state.

Accordingly, among components of the heat dissipation part 100 to be described below, components for coupling with other members, that is, the busbar coupling portion 130, the pipe coupling portion 140, and the transfer coupling portion 150 are not formed separately but are manufactured together with the heat dissipation body 110 by insert-molding. This can reduce manufacturing cost and time by virtue of the reduction of the components.

Accordingly, it will be understood that the illustrated embodiment is in a disassembled state for explanation of the structure, under assumption that the manufacturing of the heat dissipation part 100 and the coupling of the heat dissipation part 100 with the pipe part 200 and the heat transfer part 300 have been completed by the insert-molding.

The heat dissipation body 110 defines the body of the heat dissipation part 100. A space is formed inside the heat dissipation body 110 to accommodate the busbars 11, the pipe part 200, and the heat transfer part 300.

The heat dissipation body 110 extends in an extending direction of the heat dissipation part 100, namely, in the left-to-right direction in the illustrated embodiment. The extending direction of the heat dissipation body 110 may be determined to correspond to the extending direction of the pipe part 200 or the heat transfer part 300. Additionally, the extending direction of the heat dissipation body 110 may be determined to correspond to a direction in which the plurality of busbars 11 are disposed side by side to be spaced apart from one another.

The fin member 120 is disposed on an outer periphery of the heat dissipation body 110.

The fin member 120 is disposed on the outer periphery of the heat dissipation body 110 and is configured to increase the area of the outer peripheral surface of the heat dissipation body 110. Accordingly, heat transferred to the heat dissipation body 110 can be effectively dissipated to the outside of the heat dissipation body 110 through the fin member 120.

The fin member 120 may be formed in any shape that can increase the area of the outer peripheral surface of the heat dissipation body 110. In the illustrated embodiment, the fin member 120 is formed in a plate shape that extends in a width direction of the heat dissipation body 110, that is, in the front-to-rear direction, and protrudes upward.

The fin member 120 may be provided in plurality. The plurality of fin members 120 may be spaced apart from one another and disposed side by side along the extending direction of the heat dissipation body 110. In the illustrated embodiment, the plurality of fin members 120 are spaced apart from one another and form portions of the outer periphery of the heat dissipation body 110 along the left-to-right direction.

The fin members 120 may be disposed at arbitrary positions on the outer periphery of the heat dissipation body 110. In the illustrated embodiment, the fin members 120 are shown as being formed on one side opposite to the power supply interruption unit 10, namely, an upper side of the outer periphery of the heat dissipation body 110. Alternatively, the fin members 120 may also be formed on an edge of the heat dissipation body 110, namely, a front or rear edge in the illustrated embodiment.

The busbar coupling portion 130, the pipe coupling portion 140, and the transfer coupling portion 150 are formed inside the heat dissipation body 110.

The busbar coupling portion 130 is a space that accommodates the busbar 11. The busbar coupling portion 130 is formed inside the heat dissipation body 110, so that the busbar 11 accommodated in the busbar coupling portion 130 can be in contact with the heat dissipation body 110. Due to the contact, generated heat may be transferred from the busbar 11 to the heat dissipation body 110.

The busbar coupling portion 130 is located on another side, facing the power supply interruption unit 10, of each side of the heat dissipation body 110, namely, on a lower side in the illustrated embodiment. The busbar coupling portion 130 is disposed to face the fin member 120 with the pipe coupling portion 140 and the transfer coupling portion 150 interposed therebetween.

The busbar coupling portion 130 may have a shape corresponding to the shape of the busbar 11. In the illustrated embodiment, the busbar 11 is formed in a rectangular plate shape, and thus the busbar coupling portion 130 may also be formed as a rectangular plate-shaped space with a rectangular cross-section and a thickness in the vertical direction.

The busbar coupling portion 130 may be provided in plurality. The plurality of busbar coupling portions 130 may be spaced apart from one another and disposed side by side along the extending direction of the heat dissipation body 110. Accordingly, the plurality of busbars 11 may be respectively accommodated in the plurality of busbar coupling portions 130, to be physically and electrically spaced apart from one another.

At this time, the plurality of busbar coupling portions 130 may be formed to correspond to the shape of the busbar 11 they each accommodate.

That is, some of the plurality of busbar coupling portions 130 may be formed through the heat dissipation body 110 along a width direction of the heat dissipation body 110, namely, in the front-to-rear direction in the illustrated embodiment. Some other of the plurality of busbar coupling portions 130 may be recessed in one of surfaces of the heat dissipation body 110 in the width direction, that is, in a front or rear surface in the illustrated embodiment.

In any case, it is sufficient as long as the accommodated busbar 11 is stably supported and can be physically and electrically spaced apart from other busbars 11.

The pipe coupling portion 140 and the transfer coupling portion 150 are located adjacent to the busbar coupling portion 130.

The pipe coupling portion 140 is a space in which the pipe part 200 is accommodated. The pipe coupling portion 140 is formed inside the heat dissipation body 110. The pipe coupling portion 140 may extend in a longitudinal direction of the heat dissipation body 110, namely, in the left-to-right direction in the illustrated embodiment.

Each end portion in the extending direction of the pipe coupling portion 140, namely, right and left end portions in the illustrated embodiment are open to communicate with the outside. Each end portion of the pipe part 200 may be exposed to the outside through the end portion of the pipe coupling portion 140.

The pipe coupling portion 140 may have any shape capable of accommodating the pipe part 200. In the illustrated embodiment, the pipe coupling portion 140 is formed as a cylindrical space that has a circular cross-section and extends in the left-to-right direction to correspond to the shape of the pipe part 200.

The pipe coupling portion 140 communicates with a pipe accommodating portion 320 of the heat transfer part 300. Accordingly, a portion of the pipe part 200 is accommodated in the pipe coupling portion 140, and the remaining portion of the pipe part 200 is accommodated in the pipe accommodating portion 320. Accordingly, it can be said that the pipe coupling portion 140 partially accommodates the pipe part 200.

The pipe coupling portion 140 is located between the busbar coupling portion 130 and the fin member 120. That is, in the illustrated embodiment, the pipe coupling portion 140 is located below the fin member 120 and above the busbar coupling portion 130.

The transfer coupling portion 150 is formed adjacent to the pipe coupling portion 140.

The transfer coupling portion 150 is a space in which the heat transfer part 300 is accommodated. The transfer coupling portion 150 is formed inside the heat dissipation body 110. The transfer coupling portion 150 extends in the longitudinal direction of the heat dissipation body 110, namely, in the left-to-right direction in the illustrated embodiment.

Each end portion in the extending direction of the transfer coupling portion 150, namely, right and left end portions in the illustrated embodiment are open to communicate with the outside. A coupling protrusion (not given reference numeral) formed on each end portion of the heat transfer part 300 may be exposed to the outside through the end portion of the transfer coupling portion 150.

The transfer coupling portion 150 communicates with the pipe coupling portion 140. The pipe part 200, portion of which is accommodated in the pipe accommodating portion 320 of the heat transfer part 300, may have another portion accommodated in the pipe coupling portion 140.

The transfer coupling portion 150 may have any shape capable of accommodating the heat transfer part 300 and the pipe part 200 coupled to the heat transfer part 300. In the illustrated embodiment, the transfer coupling portion 150 is formed as a rectangular plate-shaped space that has a length in the left-to-right direction, a width in the front-to-rear direction, and a thickness in the vertical direction to correspond to the shape of a transfer body 310.

The transfer coupling portion 150 is located between the busbar coupling portion 130 and the fin member 120. That is, in the illustrated embodiment, the transfer coupling portion 150 is located below the fin member 120 and above the busbar coupling portion 130.

At this time, the transfer coupling portion 150 may be located to be more biased toward the busbar coupling portion 130 than the pipe coupling portion 140. Accordingly, heat generated in the busbar 11 accommodated in the busbar coupling portion 130 can be effectively transferred to the heat transfer part 300 and the pipe part 200 which are accommodated in the transfer coupling portion 150.

Referring back to FIGS. 3 and 4, the cooling module 20 according to the illustrated embodiment includes the pipe part 200.

The pipe part 200 forms a passage through which a heat transfer medium receiving heat generated from the battery (not illustrated) or the power supply interruption unit 10 is exhausted to the outside. The inside of the pipe part 200 communicates with the outside of the battery disconnect device 1, but is blocked from communicating with the inside of the battery disconnect device 1.

This can suppress damages on other components of the battery disconnect device 1 by the heat transfer medium flowing inside the pipe part 200. As a result, the occurrence of electrical accidents caused by the heat transfer medium can be suppressed.

The pipe part 200 is coupled to the heat dissipation part 100 and the heat transfer part 300. Specifically, a portion of the pipe part 200 is accommodated in the pipe coupling portion 140 of the heat dissipation part 100. The portion of the pipe part 200 accommodated in the pipe coupling portion 140 may be in contact with the heat dissipation body 110.

Additionally, another portion of the pipe part 200 is accommodated in the pipe accommodating portion 320 of the heat transfer part 300. The another portion of the pipe part 200 accommodated in the pipe accommodating portion 320 may be in contact with the transfer body 310.

Accordingly, heat generated from the busbar 11 can be transferred to the pipe part 200 through the heat dissipation body 110 or the transfer body 310. The transferred heat may be exhausted to the outside of the battery disconnect device 1 through the heat transfer medium flowing inside the pipe part 200.

The pipe part 200 may extend long along the direction in which the heat dissipation body 110 or the transfer body 310 extends. In the illustrated embodiment, the pipe part 200 extends long in the left-to-right direction. It will be understood that the extending direction of the pipe part 200 is the same as the extending direction of the profile of the power supply interruption unit 10.

In the illustrated embodiment, the pipe part 200 includes a pipe body 210 and a pipe hollow 220.

The pipe body 210 defines the body of the pipe part 200. The pipe body 210 may extend long in the extending direction, namely, in the left-to-right direction in the illustrated embodiment. Each end portion of the pipe body 210 in the extending direction may be exposed to the outside of the heat dissipation body 110 and communicate with the outside.

The pipe body 210 may be formed in any shape capable of forming a passage for the heat transfer medium through the pipe hollow 220 formed therein. In the illustrated embodiment, the pipe body 210 may be formed in a cylindrical shape that has a circular cross-section and extends in the left-to-right direction.

The pipe body 210 may be formed of a material with high thermal conductivity. This is to quickly receive the generated heat and quickly transfer it to the heat transfer medium flowing in the pipe body.

The pipe body 210 may be formed of an electrically insulating material. This is to suppress arbitrary electrical connection with the busbar 11, which is accommodated in the heat dissipation body 110 together with the pipe body 210.

The pipe body 210 may be formed of a material with water resistance. In an embodiment in which the heat transfer medium is water, this is to suppress corrosion of the pipe body 210 by the heat transfer medium.

In one embodiment, the pipe body 210 may be formed of aluminum or a metal alloy material containing aluminum.

The pipe hollow 220 is formed inside the pipe body 210.

The pipe hollow 220 is a space through which the heat transfer medium flows. The pipe hollow 220 is formed through the inside of the pipe body 210 along the longitudinal direction of the pipe body 210. In the illustrated embodiment, the pipe hollow 220 is formed through the pipe body 210 in the left-to-right direction which is the same as the extending direction of the pipe body 210.

Each end portion of the pipe hollow 220, namely, right and left end portions in the illustrated embodiment are open. The pipe hollow 220 may communicate with the outside through the respective end portions thereof. That is, the heat transfer medium may flow into the pipe hollow 220 through any one of the end portions, and may flow out of the pipe hollow 220 through the other end portion.

The pipe hollow 220 may have any shape which is open to communicate with the outside and in which the heat transfer medium can flow. In the illustrated embodiment, the pipe hollow 220 has a circular cross-section and extends in the direction in which the pipe body 210 extends, namely, in the left-to-right direction in the illustrated embodiment.

Referring back to FIGS. 3 and 4, the cooling module 20 according to the illustrated embodiment includes the heat transfer part 300.

The heat transfer part 300 receives heat generated from the battery (not illustrated) or the busbar 11 and transfers the received heat to the pipe part 200 or the heat dissipation part 100. In other words, it can be said that the busbar 11 exchanges heat with the pipe part 200 or the heat dissipation part 100 via the heat transfer part 300.

The heat transfer part 300 is accommodated in the transfer coupling portion 150 and is coupled to the heat dissipation part 100. The heat transfer part 300 accommodated in the transfer coupling portion 150 may be in contact with an inner periphery of the heat dissipation body 110. Specifically, the heat transfer part 300 accommodated in the transfer coupling portion 150 may be surrounded by the inner periphery of the heat dissipation body 110.

The heat transfer part 300 is coupled to the pipe part 200. Specifically, the inner periphery of the heat transfer part 300 may be in contact with the pipe part 200 accommodated in the pipe accommodating portion 320. Accordingly, the heat transferred to the heat transfer part 300 may be transferred to the pipe part 200 and the heat transfer medium flowing within the pipe part 200.

Therefore, heat generated from the busbar 11 can be discharged to the outside through various paths. That is, part of the generated heat may be discharged to the outside through the heat dissipation body 110 and the fin member 120. Another part of the generated heat may be transferred to the heat transfer part 300 through the heat dissipation body 110. The heat transferred to the heat transfer part 300 may partially be transferred to the pipe part 200 and partially to the fin member 120.

Accordingly, heat generated from the battery (not illustrated) or the busbar 11 can be dissipated simultaneously through various paths, thereby improving the cooling efficiency of the battery disconnect device 1.

The heat transfer part 300 may be formed of a material with high thermal conductivity. This is to quickly receive and transfer generated heat.

The heat transfer part 300 may be formed of an electrically insulating material. This is to suppress arbitrary electrical connection to the plurality of busbars 11 disposed adjacently.

In one embodiment, the heat transfer part 300 may be formed of aluminum or a metal alloy material containing aluminum.

In the illustrated embodiment, the heat transfer part 300 includes a transfer body 310 and a pipe accommodating portion 320.

The transfer body 310 defines the body of the heat transfer part 300. The heat transfer part 310 may be accommodated in the transfer coupling portion 150 and disposed so that its outer peripheral surface is in contact with the inner peripheral surface of the heat dissipation body 110. Accordingly, heat transfer may be made by conduction between the transfer body 310 and the heat dissipation body 110.

The transfer body 310 may be formed in a shape corresponding to the shape of the heat dissipation body 110 or the transfer coupling portion 150 formed therein. In the illustrated embodiment, the transfer body 310 is formed to have an extension length in the left-to-right direction longer than an extension length in the front-to-rear direction, and has a thickness in the vertical direction.

A coupling protrusion (not given reference numeral) is formed on each end portion of the transfer body 310 in its extending direction, namely, at least one of the left end portion and the right end portion in the illustrated embodiment. The coupling protrusion (not given reference numeral) is coupled through an opening that is formed in each end portion of the transfer coupling portion 150 in the extending direction of the transfer coupling portion 150, namely, at least one of the left end portion and the right end portion in the illustrated embodiment.

Therefore, the transfer body 310 can be stably maintained in the state accommodated in the transfer coupling portion 150.

The pipe accommodating portion 320 is recessed inside the transfer body 310.

The pipe accommodating portion 320 is a space in which the pipe part 200 is accommodated. The pipe part 200 accommodated in the pipe accommodating portion 320 may be surrounded by and in contact with the inner peripheral surface of the transfer body 310 that surrounds the pipe accommodating portion 320.

At this time, one side of the pipe accommodating portion 320 opposite to the busbar 11, namely, an upper side (or top) in the illustrated embodiment is open. The upper side of the pipe accommodating portion 320 is disposed to be covered by an inner surface of the heat dissipation body 110 that surrounds the transfer coupling portion 150 from the upper side.

Accordingly, a portion of the pipe part 200 accommodated in the pipe accommodating portion 320 may be located adjacent to the inner surface of the heat dissipation body 110. In one embodiment, the portion of the pipe part 200 may be in contact with the inner surface of the heat dissipation body 110.

The pipe accommodating portion 320 may extend in the extending direction of the transfer body 310, namely, in the left-to-right direction in the illustrated embodiment. Each end portion of the pipe accommodating portion 320 in its extending direction, namely, the left end portion and the right end portion in the illustrated embodiment may be open, such that each end portion of the pipe part 200 in its extending direction can be exposed to the outside.

The pipe accommodating portion 320 communicates with the pipe coupling portion 140. The portion of the pipe part 200 accommodated in the pipe accommodating portion 320 may be surrounded by the inner surface of the heat dissipation body 110 that surrounds the pipe coupling portion 140. In one embodiment, as described above, the pipe part 200 can be in contact with the inner surface of the heat dissipation body 110 to exchange heat.

The cooling module 20 according to one embodiment of the present disclosure described above can dissipate heat generated from the battery (not illustrated) or the busbar 11 to the outside through various paths.

Specifically, the busbar 11 may be accommodated in the busbar coupling portion 130 of the heat dissipation part 100, and the generated heat may be transferred to the heat dissipation body 110.

The plurality of fin members 120 are formed on the outer periphery of the heat dissipation body 110 on one side thereof, namely, on an upper outer periphery in the illustrated embodiment. A part of the heat transferred to the portion of the heat dissipation body 110, that is, the portion surrounding the busbar coupling portion 130 may be dissipated to the outside through the plurality of fin members 120.

The heat transfer part 300 is accommodated in the transfer coupling portion 150 formed inside the heat dissipation body 110. The transfer coupling portion 150 communicates with the pipe coupling portion 140, so that the heat transfer part 300 and the pipe part 200 coupled to the heat transfer part 300 are in contact with the inner peripheral surface of the heat dissipation body 110.

Another part of the heat transferred to the portion of the heat dissipation body 110 may be transferred to the pipe part 200 via the transfer body 310. A part of the heat transferred to the pipe part 200 may be dissipated to the outside through the heat transfer medium, or may be dissipated to the outside through the fin members 120 via the heat dissipation body 110 again.

Furthermore, another part of the heat transferred to the transfer body 310 may be dissipated to the outside through the fin members 120 via another portion of the heat dissipation body 110, namely, a portion that surrounds the transfer body 310 from the upper side.

At this time, the heat transfer medium flows only in the pipe hollow 220. That is, until the heat transfer medium flows in from the outside of the cooling module 20 and then flows out after heat exchange, the heat transfer medium does not leak or flow to the outside of the pipe part 200.

Therefore, arbitrary leakage of the heat transfer medium can be suppressed even if a separate member is not disposed.

Additionally, the heat dissipation part 100, the pipe part 200, and the heat transfer part 300 may be coupled in close contact by insert-molding. Accordingly, separate members and processes for coupling the heat dissipation part 100, the pipe part 200, and the heat transfer part 300 are not required, which can reduce manufacturing costs and simplify the manufacturing process.

### 4. Description of cooling module 30 according to another embodiment

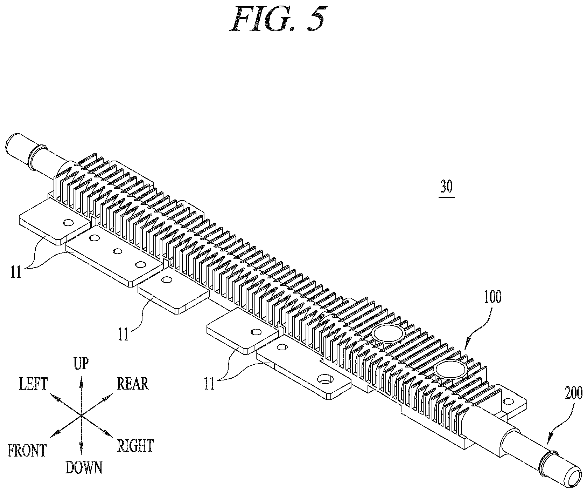

Referring to FIGS. 5 to 6, a cooling module 30 according to another embodiment of the present disclosure is illustrated.

When compared to the cooling module 20 according to the previous embodiment, the cooling module 30 according to this embodiment has the same functions but has some differences in configuration. Therefore, in the following description, the cooling module 30 according to this embodiment will be described in detail, focusing on the configuration.

As described above, the cooling module 30 according to this embodiment may also constitute the battery disconnect device 10 by being coupled to the power supply interruption unit 10, in the same form as the cooling module 20 according to the previous embodiment. That is, as illustrated in FIG. 1, the cooling module 30 may be coupled to the power supply interruption unit 10 while covering the power supply interruption unit 10 from the upper side.

Accordingly, as illustrated in FIG. 5, one side, namely, a lower side facing the power supply interruption unit 10, of each side of the cooling module 30, may be in contact with the busbar 11 to exchange heat.

Compared to the cooling module 20 according to the previous embodiment, the cooling module 30 according to this embodiment is not provided with a component corresponding to the heat transfer part 300. Accordingly, it will be understood that a discharge path related to the heat transfer part 300 among the discharge paths of heat generated from the battery (not illustrated) or the busbar 11 is not formed.

In the illustrated embodiment, the cooling module 30 includes a heat dissipation part 100 and a pipe part 200.

The heat dissipation part 100 is coupled to the busbar 11 and receives heat generated from the busbar 11. Additionally, the heat dissipation part 100 is coupled to the pipe part 200 and transfers the received heat to the pipe part 200 and a heat transfer medium flowing within the pipe part 200.

The heat dissipation part 100 is coupled to the pipe part 200. A space (a pipe coupling portion 140 to be described later) may be formed inside the heat dissipation part 100, so that the pipe part 200 can be accommodated in communication with the outside.

The heat dissipation part 100 may be formed in a shape corresponding to the shape of the cooling module 30. In the illustrated embodiment, the heat dissipation part 100 has a rectangular pillar shape with a length in the left-to-right direction, a width in the front-to-rear direction, and a thickness in the vertical direction. It will be understood that the shape of the heat dissipation part 100 may change to correspond to the shape of the power supply interruption unit 10.

The conditions and properties of the material forming the heat dissipation part 100 according to this embodiment are the same as those of the heat dissipation part 100 disposed in the cooling module 20 according to the previous embodiment. Accordingly, the description of the material of the heat dissipation part 100 will be replaced with the foregoing description.

At this time, the heat dissipation part 100 and the pipe part 200 may be coupled to each other through a single process. In an embodiment in which the heat dissipation part 100 is formed of a material containing synthetic resin, after the disposition of the pipe part 200 is completed, a material forming the heat dissipation part 100 may be insert-molded to form the cooling module 30.

That is, in the above embodiment, the cooling module 30 may be manufactured by insert-molding.

Therefore, any separate component is not required to couple each component of the cooling module 30, that is, the heat dissipation part 100 and the pipe part 200, and maintain the coupled state. This can reduce manufacturing cost and time by virtue of the reduction of the number of components.

Furthermore, the heat dissipation part 100 and the pipe part 200 may be coupled in close contact with each other, thereby improving airtightness and heat transfer efficiency.

In addition, since there is no need to form a space for accommodating the heat transfer part 300 inside the heat dissipation part 100, the size of the heat dissipation part 100 can be reduced.

Additionally, the pipe part 200 is maintained coupled to the heat dissipation part 100, and the heat transfer medium flows only inside the pipe part 200. Therefore, no separate configuration is required to suppress random leakage of the heat transfer medium.

This can result in improving cooling efficiency by the heat transfer medium while simplifying the structure of the cooling module 30. It will be understood that the cooling module 30 according to this embodiment can be disposed in a small battery disconnect device 1, compared to the cooling module 20 according to the previous embodiment.

In the illustrated embodiment, the heat dissipation part 100 may include a heat dissipation body 110, a fin member 120, a busbar coupling portion 130, and a pipe coupling portion 140.

As described above, the cooling module 30 may be manufactured by insert-molding. In the embodiment, any separate component is not required to couple the pipe part 200 to the heat dissipation part 100 and maintain the coupled state.

Accordingly, among components of the heat dissipation part 100 to be described below, components, that is, the busbar coupling portion 130 and the pipe coupling portion 140 for coupling with other members are not formed separately but are manufactured together with the heat dissipation body 110 by insert-molding. This can reduce manufacturing cost and time by virtue of the reduction of the number of components.

Accordingly, it will be understood that the illustrated embodiment is in a disassembled state for explanation of the structure, under assumption that the manufacturing of the heat dissipation part 100 by insert-molding and the coupling of the heat dissipation part 100 with the pipe part 200 have been completed.

The heat dissipation body 110 defines the body of the heat dissipation part 100. A space is formed inside the heat dissipation body 110 to accommodate the busbar 11 and the pipe part 200.

The heat dissipation body 110 extends in an extending direction of the heat dissipation part 100, namely, in the left-to-right direction in the illustrated embodiment. The extending direction of the heat dissipation body 110 may be determined to correspond to the extending direction of the pipe part 200. Additionally, the extending direction of the heat dissipation body 110 may be determined to correspond to a direction in which the plurality of busbars 11 are disposed side by side to be spaced apart from one another.

The fin member 120 is disposed on an outer periphery of the heat dissipation body 110.

The fin member 120 is disposed on the outer periphery of the heat dissipation body 110 and is configured to increase the area of the outer peripheral surface of the heat dissipation body 110. Accordingly, heat transferred to the heat dissipation body 110 can be effectively dissipated to the outside of the heat dissipation body 110 through the fin member 120.

The fin member 120 may be formed in any shape that can increase the area of the outer peripheral surface of the heat dissipation body 110. In the illustrated embodiment, the fin member 120 is formed in a plate shape that extends in a width direction of the heat dissipation body 110, that is, in the front-to-rear direction, and protrudes upward.

The fin member 120 may be provided in plurality. The plurality of fin members 120 may be spaced apart from one another and disposed side by side along the extending direction of the heat dissipation body 110. In the illustrated embodiment, the plurality of fin members 120 are spaced apart from one another and form a portion of the outer periphery of the heat dissipation body 110 along the left-to-right direction.

The fin members 120 may be disposed at arbitrary positions on the outer periphery of the heat dissipation body 110. In the illustrated embodiment, the fin members 120 are shown as being formed on one side opposite to the power supply interruption unit 10, namely, an upper side of the outer periphery of the heat dissipation body 110. Alternatively, the fin members 120 may also be formed on an edge of the heat dissipation body 110, namely, on a front or rear edge in the illustrated embodiment.

The busbar coupling portion 130 and the pipe coupling portion 140 are formed inside the heat dissipation body 110.

The busbar coupling portion 130 is a space that accommodates the busbar 11. The busbar coupling portion 130 is formed inside the heat dissipation body 110, so that the busbar 11 accommodated in the busbar coupling portion 130 can be in contact with the heat dissipation body 110. Due to the contact, generated heat can be transferred from the busbar 11 to the heat dissipation body 110.

The busbar coupling portion 130 is located on another side, facing the power supply interruption unit 10, of each side of the heat dissipation body 110, namely, on a lower side in the illustrated embodiment. The busbar coupling portion 130 is disposed to face the fin member 120 with the pipe coupling portion 140 interposed therebetween.

The busbar coupling portion 130 may have a length corresponding to the shape of the busbar 11. In the illustrated embodiment, the busbar 11 is formed in a rectangular plate shape, and thus the busbar coupling portion 130 may also be formed as a rectangular plate-shaped space with a rectangular cross-section and a thickness in the vertical direction.

The busbar coupling portion 130 may be provided in plurality. The plurality of busbar coupling portions 130 may be spaced apart from one another and disposed side by side along the extending direction of the heat dissipation body 110. Accordingly, the plurality of busbars 11 may be respectively accommodated in the plurality of busbar coupling portions 130, to be physically and electrically spaced apart from one another.

At this time, the plurality of busbar coupling portions 130 may be formed to correspond to the shape of the busbars 11 accommodated therein.

That is, some of the plurality of busbar coupling portions 130 may be formed through the heat dissipation body 110 along a width direction of the heat dissipation body 110, namely, in the front-to-rear direction in the illustrated embodiment. Some other of the plurality of busbar coupling portions 130 may be recessed in one of surfaces of the heat dissipation body 110 in the width direction, that is, in a front or rear surface in the illustrated embodiment.

In any case, it is sufficient if the accommodated busbar 11 is stably supported and can be physically and electrically spaced apart from other busbars 11.

The pipe coupling portion 140 is located adjacent to the busbar coupling portion 130.

The pipe coupling portion 140 is a space that accommodates the pipe part 200. The pipe coupling portion 140 is formed inside the heat dissipation body 110. The pipe coupling portion 140 may extend in a longitudinal direction of the heat dissipation body 110, namely, in the left-to-right direction in the illustrated embodiment.

Each end portion of the pipe coupling portion 140, namely, right and left end portions in the illustrated embodiment are open to communicate with the outside. Each end portion of the pipe part 200 may be exposed to the outside through the end portion of the pipe coupling portion 140.

The pipe coupling portion 140 may have any shape capable of accommodating the pipe part 200. In the illustrated embodiment, the pipe coupling portion 140 is formed as a cylindrical space that has a circular cross-section and extends in the left-to-right direction to correspond to the shape of the pipe part 200.

The pipe coupling portion 140 is located between the busbar coupling portion 130 and the fin member 120. That is, in the illustrated embodiment, the pipe coupling portion 140 is located below the fin member 120 and above the busbar coupling portion 130.

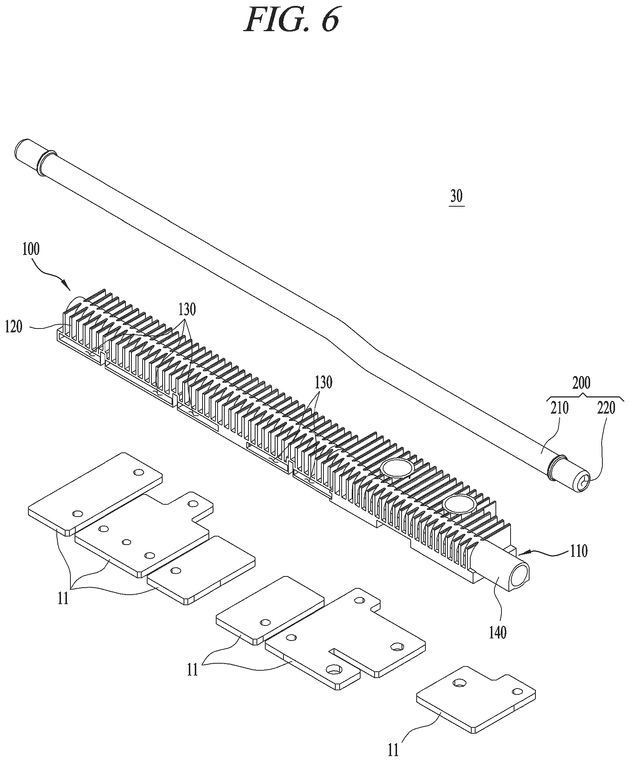

Referring back to FIGS. 5 and 6, the cooling module 30 according to the illustrated embodiment includes the pipe part 200.

The pipe part 200 forms a passage through which a heat transfer medium flows, and here, the heat transfer medium receives heat generated from the battery (not illustrated) or the power supply interruption unit 10 and discharges the received heat to the outside. The inside of the pipe part 200 communicates with the outside of the battery disconnect device 1, but is blocked from communication with the inside of the battery disconnect device 1.

This can suppress damage to other components of the battery disconnect device 1 by the heat transfer medium flowing inside the pipe part 200. As a result, the occurrence of electrical accidents caused by the heat transfer medium can be suppressed.

The pipe part 200 is coupled to the heat dissipation part 100. Specifically, the pipe part 200 is accommodated in the pipe coupling portion 140 of the heat dissipation part 100. The outer periphery of the pipe part 200 accommodated in the pipe coupling portion 140 may be in contact with the inner periphery of the heat dissipation body 110 which surrounds the pipe coupling portion 140.

Accordingly, the heat generated from the busbar 11 can be transferred to the pipe part 200 through the heat dissipation body 110. The transferred heat may be discharged to the outside of the battery disconnect device 1 through the heat transfer medium flowing inside the pipe part 200.

The pipe part 200 may extend long along the direction in which the heat dissipation body 110 extends. In the illustrated embodiment, the pipe part 200 extends long in the left-to-right direction. It will be understood that the extending direction of the pipe part 200 is the same as the extending direction of the profile of the power supply interruption unit 10.

In the illustrated embodiment, the pipe part 200 includes a pipe body 210 and a pipe hollow 220.

The pipe body 210 defines the body of the pipe part 200. The pipe body 210 may extend long in the extending direction, namely, in the left-to-right direction in the illustrated embodiment. Each end portion of the pipe body 210 in the extending direction may be exposed to the outside of the heat dissipation body 110 and communicate with the outside.

The pipe body 210 may be formed in any shape capable of forming a passage of the heat transfer medium through the pipe hollow 220 formed therein. In the illustrated embodiment, the pipe body 210 may be formed in a cylindrical shape that has a circular cross-section and extends in the left-to-right direction.

The pipe body 210 may be formed of a material with high thermal conductivity. This is to quickly receive the generated heat and quickly transfer it to the heat transfer medium flowing in the pipe body.

The pipe body 210 may be formed of an electrically insulating material. This is to suppress arbitrary electrical connection with the busbar 11, which is accommodated in the heat dissipation body 110 together with the pipe body 210.

The pipe body 210 may be formed of a material with water resistance. In an embodiment in which the heat transfer medium is water, this is to suppress corrosion due to the heat transfer medium.

In one embodiment, the pipe body 210 may be formed of aluminum or a metal alloy material containing aluminum.

The pipe hollow 220 is formed inside the pipe body 210.

The pipe hollow 220 is a space through which the heat transfer medium flows. The pipe hollow 220 is formed through the inside of the pipe body 210 along the longitudinal direction of the pipe body 210. In the illustrated embodiment, the pipe hollow 220 is formed through the pipe body 210 in the left-to-right direction which is the same as the extending direction of the pipe body 210.

Respective end portions of the pipe hollow 220, namely, right and left end portions in the illustrated embodiment are open. The pipe hollow 220 may communicate with the outside through the respective end portions. That is, the heat transfer medium may flow into the pipe hollow 220 through any one of the end portions, and may flow out of the pipe hollow 220 through the other end portion.

The pipe hollow 220 may have any shape which is open to communicate with the outside such that the heat transfer medium can flow. In the illustrated embodiment, the pipe hollow 220 has a circular cross-section and extends in the direction in which the pipe body 210 extends, namely, in the left-to-right direction in the illustrated embodiment.

The cooling module 30 according to one embodiment of the present disclosure described above can dissipate heat generated from the battery (not illustrated) or the busbar 11 to the outside through various paths.

Specifically, the busbar 11 may be accommodated in the busbar coupling portion 130 of the heat dissipation part 100, and the generated heat may be transferred to the heat dissipation body 110.

The plurality of fin members 120 are formed on the outer periphery of the heat dissipation body 110 on one side thereof, namely, on an upper outer periphery in the illustrated embodiment. A part of the heat transferred to the portion of the heat dissipation body 110, that is, the portion surrounding the busbar coupling portion 130 may be dissipated to the outside through the plurality of fin members 120.

The pipe part 200 is accommodated in the pipe coupling portion 140 formed inside the heat dissipation body 110. The pipe part 200 is disposed so that its outer periphery is in contact with the inner periphery of the heat dissipation body 110.

Accordingly, another part of the heat transferred to the portion of the heat dissipation body 110 can be transferred to the pipe part 200. A part of the heat transferred to the pipe part 200 may be dissipated to the outside through the heat transfer medium, or may be dissipated to the outside through the fin members 120 via the heat dissipation body 110 again.

At this time, the heat transfer medium flows only in the pipe hollow 220. That is, until the heat transfer medium flows in from the outside of the cooling module 30 and then flows out after heat exchange, the heat transfer medium does not leak or flow to the outside of the pipe part 200.

Therefore, arbitrary leakage of the heat transfer medium can be suppressed even if a separate member is not disposed.

Additionally, the heat dissipation part 100 and the pipe part 200 may be coupled in close contact by insert-molding. Accordingly, separate members and processes for coupling the heat dissipation part 100 and the pipe part 200 are not required, which can reduce manufacturing costs and simplify the manufacturing process.

This can also minimize the configuration for forming the passage of the heat transfer medium and receiving heat generated from the battery (not illustrated) or the power supply interruption unit 10, thereby simplifying the overall structure of the cooling module 30 and reducing the size of the cooling module 30. Accordingly, even when the battery disconnect device 1 has a small size, sufficient cooling efficiency can be expected.

### 5. Description of cooling module 40 according to still another embodiment

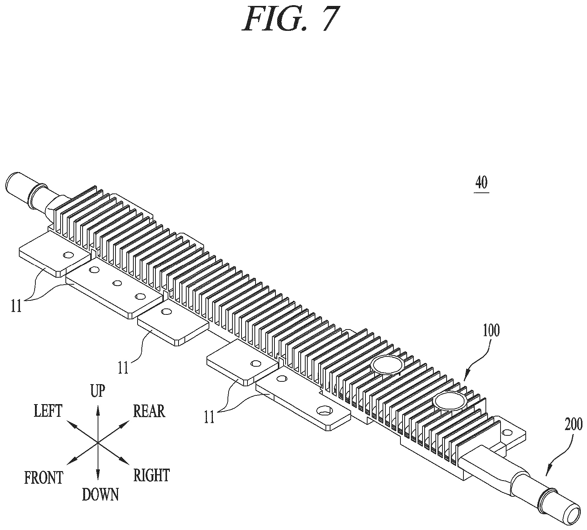

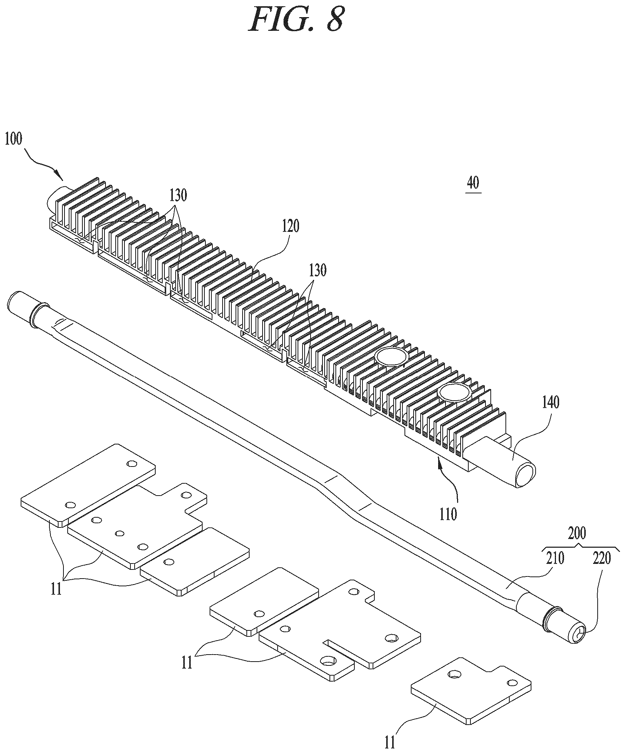

Referring to FIGS. 7 and 8, a cooling module 40 according to still another embodiment of the present disclosure is illustrated.

When compared to the cooling modules 20 and 30 according to the previous embodiments, the cooling module 40 according to this embodiment has the same functions but has some differences in configuration. Therefore, in the following description, the cooling module 40 according to this embodiment will be described in detail, focusing on the configuration.

As described above, the cooling module 40 according to this embodiment may also constitute the battery disconnect device 10 by being coupled to the power supply interruption unit 10, in the same form as the cooling modules 20 and 30 according to the previous embodiments. That is, as illustrated in FIG. 1, the cooling module 40 may be coupled to the power supply interruption unit 10 while covering the power supply interruption unit 10 from the upper side.

Accordingly, as illustrated in FIG. 7, one side, namely, a lower side facing the power supply interruption unit 10, of each side of the cooling module 40, may be in contact with the busbar 11 to exchange heat.

Compared to the cooling module 20 according to the previous embodiment, the cooling module 40 according to this embodiment is not provided with a component corresponding to the heat transfer part 300. Accordingly, it will be understood that a discharge path related to the heat transfer part 300 among the discharge paths of the heat generated from the battery (not illustrated) or the busbar 11 is not formed.

Additionally, compared to the cooling modules 20 and 30 according to the previous embodiments, the cooling module 40 according to this embodiment has a difference in the shape of the pipe part 200. As will be described later, the pipe part 200 may be formed to be partially flat. Accordingly, a contact area between the pipe part 200 and the heat dissipation portion 100 can increase, thereby improving heat exchange efficiency.

In the illustrated embodiment, the cooling module 40 includes a heat dissipation part 100 and a pipe part 200.

The heat dissipation part 100 is coupled to the busbar 11 and receives heat generated from the busbar 11. Additionally, the heat dissipation part 100 is coupled to the pipe part 200 and transfers the received heat to the pipe part 200 and a heat transfer medium flowing within the pipe part 200.

The heat dissipation part 100 is coupled to the pipe part 200. A space (a pipe coupling portion 140 to be described later) may be formed inside the heat dissipation part 100, so that the pipe part 200 can be accommodated in communication with the outside.

The heat dissipation part 100 may be formed in a shape corresponding to the shape of the cooling module 40. In the illustrated embodiment, the heat dissipation part 100 has a rectangular pillar shape with a length in the left-to-right direction, a width in the front-to-rear direction, and a thickness in the vertical direction. It will be understood that the shape of the heat dissipation part 100 may change to correspond to the shape of the power supply interruption unit 10.

The conditions and properties of the material forming the heat dissipation part 100 according to this embodiment are the same as those of the heat dissipation part 100 disposed in the cooling modules 20 and 30 according to the previous embodiments. Accordingly, the description of the material of the heat dissipation part 100 will be replaced with the foregoing description.

At this time, the heat dissipation part 100 and the pipe part 200 may be coupled to each other through a single process. In an embodiment in which the heat dissipation part 100 is formed of a material containing synthetic resin, after the disposition of the pipe part 200 is completed, a material forming the heat dissipation part 100 may be insert-molded to form the cooling module 40.

That is, in the above embodiment, the cooling module 40 may be manufactured by insert-molding.

Therefore, any separate component is not required to couple each component of the cooling module 40, that is, the heat dissipation part 100 and the pipe part 200, and maintain the coupled state. This can reduce manufacturing cost and time by virtue of the reduction of the number of components.

Furthermore, the heat dissipation part 100 and the pipe part 200 may be coupled in close contact with each other, thereby improving airtightness and heat transfer efficiency.

In addition, since there is no need to form a space for accommodating the heat transfer part 300 inside the heat dissipation part 100, the size of the heat dissipation part 100 can be reduced.

Additionally, the pipe part 200 is maintained coupled to the heat dissipation part 100, and the heat transfer medium flows only inside the pipe part 200. Therefore, no separate configuration is required to suppress arbitrary leakage of the heat transfer medium.

This can result in improving cooling efficiency by the heat transfer medium while simplifying the structure of the cooling module 40. It will be understood that the cooling module 40 according to this embodiment can be disposed in a small battery disconnect device 1, compared to the cooling module 20 according to the previous embodiment.

In the illustrated embodiment, the heat dissipation part 100 may include a heat dissipation body 110, a fin member 120, a busbar coupling portion 130, and a pipe coupling portion 140.

As described above, the cooling module 40 may be manufactured by insert-molding. In the embodiment, any separate component is not required to couple the pipe part 200 to the heat dissipation part 100 and maintain the coupled state.

Accordingly, among components of the heat dissipation part 100 to be described below, components, that is, the busbar coupling portion 130 and the pipe coupling portion 140 for coupling with other members are not formed separately but are manufactured together with the heat dissipation body 110 by insert-molding. This can reduce manufacturing cost and time by virtue of the reduction of the number of components.

Accordingly, it will be understood that the illustrated embodiment is in a disassembled state for explanation of the structure, under assumption that the manufacturing of the heat dissipation part 100 by insert-molding and the coupling of the heat dissipation part 100 with the pipe part 200 have been completed.

The heat dissipation body 110 defines the body of the heat dissipation part 100. A space is formed inside the heat dissipation body 110 to accommodate the busbar 11 and the pipe part 200.

The heat dissipation body 110 extends in an extending direction of the heat dissipation part 100, namely, in the left -to-right direction in the illustrated embodiment. The extending direction of the heat dissipation body 110 may be determined to correspond to the extending direction of the pipe part 200. Additionally, the extending direction of the heat dissipation body 110 may be determined to correspond to a direction in which the plurality of busbars 11 are disposed side by side to be spaced apart from one another.

The fin member 120 is disposed on an outer periphery of the heat dissipation body 110.

The fin member 120 is disposed on the outer periphery of the heat dissipation body 110 and is configured to increase the area of the outer peripheral surface of the heat dissipation body 110. Accordingly, heat transferred to the heat dissipation body 110 can be effectively dissipated to the outside of the heat dissipation body 110 through the fin member 120.

The fin member 120 may be formed in any shape that can increase the area of the outer peripheral surface of the heat dissipation body 110. In the illustrated embodiment, the fin member 120 is formed in a plate shape that extends in a width direction of the heat dissipation body 110, that is, in the front-to-rear direction, and protrudes upward.

The fin member 120 may be provided in plurality. The plurality of fin members 120 may be spaced apart from one another and disposed side by side along the extending direction of the heat dissipation body 110. In the illustrated embodiment, the plurality of fin members 120 are spaced apart from one another and form a portion of the outer periphery of the heat dissipation body 110 along the left-to-right direction.

The fin members 120 may be disposed at arbitrary positions on the outer periphery of the heat dissipation body 110. In the illustrated embodiment, the fin members 120 are shown as being formed on one side opposite to the power supply interruption unit 10, namely, an upper side of the outer periphery of the heat dissipation body 110. Alternatively, the fin members 120 may also be formed on an edge of the heat dissipation body 110, namely, on a front or rear edge in the illustrated embodiment.

The busbar coupling portion 130 and the pipe coupling portion 140 are formed inside the heat dissipation body 110.

The busbar coupling portion 130 is a space that accommodates the busbar 11. The busbar coupling portion 130 is formed inside the heat dissipation body 110, so that the busbar 11 accommodated in the busbar coupling portion 130 can be in contact with the heat dissipation body 110. Due to the contact, generated heat may be transferred from the busbar 11 to the heat dissipation body 110.

The busbar coupling portion 130 is located on another side, facing the power supply interruption unit 10, of each side of the heat dissipation body 110, namely, on a lower side in the illustrated embodiment. The busbar coupling portion 130 is disposed to face the fin member 120 with the pipe coupling portion 140 interposed therebetween.

The busbar coupling portion 130 may have a length corresponding to the shape of the busbar 11. In the illustrated embodiment, the busbar 11 is formed in a rectangular plate shape, and thus the busbar coupling portion 130 may also be formed as a rectangular plate-shaped space with a rectangular cross-section and a thickness in the vertical direction.

The busbar coupling portion 130 may be provided in plurality. The plurality of busbar coupling portions 130 may be spaced apart from one another and disposed side by side along the extending direction of the heat dissipation body 110. Accordingly, the plurality of busbars 11 may be respectively accommodated in the plurality of busbar coupling portions 130, to be physically and electrically spaced apart from one another.

At this time, the plurality of busbar coupling portions 130 may be formed to correspond to the shape of the busbars 11 accommodated therein.

That is, some of the plurality of busbar coupling portions 130 may be formed through the heat dissipation body 110 along a width direction of the heat dissipation body 110, namely, in the front-to-rear direction in the illustrated embodiment. Some other of the plurality of busbar coupling portions 130 may be recessed in one of surfaces of the heat dissipation body 110 in the width direction, that is, in a front or rear surface in the illustrated embodiment.

In any case, it is sufficient if the accommodated busbar 11 is stably supported and can be physically and electrically spaced apart from other busbars 11.

The pipe coupling portion 140 is located adjacent to the busbar coupling portion 130.

The pipe coupling portion 140 is a space that accommodates the pipe part 200. The pipe coupling portion 140 is formed inside the heat dissipation body 110. The pipe coupling portion 140 may extend in a longitudinal direction of the heat dissipation body 110, namely, in the left-to-right direction in the illustrated embodiment.

Each end portion of the pipe coupling portion 140, namely, right and left end portions in the illustrated embodiment are open to communicate with the outside. Each end portion of the pipe part 200 may be exposed to the outside through the end portion of the pipe coupling portion 140.

The pipe coupling portion 140 may have any shape capable of accommodating the pipe part 200. As described above, the pipe part 200 disposed in the cooling module 40 according to this embodiment is formed such that a portion of the pipe body 210 is flat.

Accordingly, in the illustrated embodiment, the pipe coupling portion 140 extends in the left-to-right direction to correspond to the shape of the pipe part 200, and each end portion of the pipe coupling portion 140 has a circular cross-section and a portion between the end portions of the pipe coupling portion 140 has a plate-shaped cross section.

Accordingly, a contact area between the inner periphery of the heat dissipation body 110 surrounding the pipe coupling portion 140 and the pipe body 210 can increase, thereby improving heat exchange efficiency.

The pipe coupling portion 140 is located between the busbar coupling portion 130 and the fin member 120. That is, in the illustrated embodiment, the pipe coupling portion 140 is located below the fin member 120 and above the busbar coupling portion 130.

Referring back to FIGS. 7 and 8, the cooling module 40 according to the illustrated embodiment includes the pipe part 200.

The pipe part 200 forms a passage through which a heat transfer medium flows, and here, the heat transfer medium receives heat generated from the battery (not illustrated) or the power supply interruption unit 10 and dissipates the received heat to the outside. The inside of the pipe part 200 communicates with the outside of the battery disconnect device 1, but is blocked from communication with the inside of the battery disconnect device 1.

This can suppress damage to other components of the battery disconnect device 1 by the heat transfer medium flowing inside the pipe part 200. As a result, the occurrence of electrical accidents caused by the heat transfer medium can be suppressed.

The pipe part 200 is coupled to the heat dissipation part 100. Specifically, the pipe part 200 is accommodated in the pipe coupling portion 140 of the heat dissipation part 100. The outer periphery of the pipe part 200 accommodated in the pipe coupling portion 140 may be in contact with the inner periphery of the heat dissipation body 110 which surrounds the pipe coupling portion 140.

Accordingly, the heat generated from the busbar 11 can be transferred to the pipe part 200 through the heat dissipation body 110. The transferred heat may be dissipated to the outside of the battery disconnect device 1 through the heat transfer medium flowing inside the pipe part 200.

The pipe part 200 may extend long along the direction in which the heat dissipation body 110 extends. In the illustrated embodiment, the pipe part 200 extends long in the left-to-right direction. It will be understood that the extending direction of the pipe part 200 is the same as the extending direction of the profile of the power supply interruption unit 10.

In the illustrated embodiment, the pipe part 200 includes a pipe body 210 and a pipe hollow 220.

The pipe body 210 defines the body of the pipe part 200. The pipe body 210 may extend long in the extending direction, namely, in the left-to-right direction in the illustrated embodiment. Each end portion of the pipe body 210 in the extending direction may be exposed to the outside of the heat dissipation body 110 and communicate with the outside.

The pipe body 210 may be formed in any shape capable of forming a passage of the heat transfer medium through the pipe hollow 220 formed therein. In the illustrated embodiment, the pipe body 210 extends in the left-to-right direction, such that each end portion in the extending direction has a circular cross-section, and a portion between the end portions has a rectangular cross-section with a width in the front-to-rear direction and a thickness in the vertical direction.

Accordingly, the cross-sectional area of each end portion of the pipe body 210 is formed to be larger than the cross-sectional area of the portion between the end portions. On the other hand, the area of the outer peripheral surface of the portion between the end portions of the pipe body 210 is formed to be larger than the area of the outer peripheral surface of each end portion.

Accordingly, the contact area between the pipe body 210 and the heat dissipation body 110 can increase, thereby improving heat exchange efficiency.

The pipe body 210 may be formed of a material with high thermal conductivity. This is to quickly receive the generated heat and quickly transfer it to the heat transfer medium flowing in the pipe body.

The pipe body 210 may be formed of an electrically insulating material. This is to suppress arbitrary electrical connection with the busbar 11, which is accommodated in the heat dissipation body 110 together with the pipe body 210.

The pipe body 210 may be formed of a material with water resistance. In an embodiment in which the heat transfer medium is water, this is to suppress corrosion by the heat transfer medium.

In one embodiment, the pipe body 210 may be formed of aluminum or a metal alloy material containing aluminum.

The pipe hollow 220 is formed inside the pipe body 210.

The pipe hollow 220 is a space through which the heat transfer medium flows. The pipe hollow 220 is formed through the inside of the pipe body 210 along the longitudinal direction of the pipe body 210. In the illustrated embodiment, the pipe hollow 220 is formed through the pipe body 210 in the left-to-right direction which is the same as the extending direction of the pipe body 210.

Respective end portions of the pipe hollow 220, namely, right and left end portions in the illustrated embodiment are open. The pipe hollow 220 may communicate with the outside through the respective end portions. That is, the heat transfer medium may flow into the pipe hollow 220 through any one of the end portions, and may flow out of the pipe hollow 220 through the other end portion.

The pipe hollow 220 may have any shape which is open to communicate with the outside such that the heat transfer medium can flow. In the illustrated embodiment, the pipe body 220 extends in the left-to-right direction, such that each end portion in the extending direction has a circular cross-section, and a portion between the end portions has a rectangular cross-section with a width in the front-to-rear direction and a thickness in the vertical direction. It will be understood that the shape of the pipe hollow 220 corresponds to the shape of the pipe body 210.

The cooling module 40 according to one embodiment of the present disclosure described above can dissipate heat generated from the battery (not illustrated) or the busbar 11 to the outside through various paths.

Specifically, the busbar 11 may be accommodated in the busbar coupling portion 130 of the heat dissipation part 100, and the generated heat may be transferred to the heat dissipation body 110.

The plurality of fin members 120 are formed on the outer periphery of the heat dissipation body 110 on one side thereof, namely, on an upper outer periphery in the illustrated embodiment. A part of the heat transferred to the portion of the heat dissipation body 110, that is, the portion surrounding the busbar coupling portion 130 may be dissipated to the outside through the plurality of fin members 120.

The pipe part 200 is accommodated in the pipe coupling portion 140 formed inside the heat dissipation body 110. The pipe part 200 is disposed so that its outer periphery is in contact with the inner periphery of the heat dissipation body 110.

Accordingly, another part of the heat transferred to the portion of the heat dissipation body 110 can be transferred to the pipe part 200. A part of the heat transferred to the pipe part 200 may be dissipated to the outside through the heat transfer medium or may be dissipated to the outside through the fin member 120 via the heat dissipation body 110 again.

At this time, the heat transfer medium flows only in the pipe hollow 220. That is, until the heat transfer medium flows in from the outside of the cooling module 40 and then flows out after heat exchange, the heat transfer medium does not leak or flow to the outside of the pipe part 200.

Therefore, arbitrary leakage of the heat transfer medium can be suppressed even if a separate member is not disposed.

Additionally, the heat dissipation part 100 and the pipe part 200 may be coupled in close contact by insert-molding. Accordingly, separate members and processes for coupling the heat dissipation part 100 and the pipe part 200 are not required, which can reduce manufacturing costs and simplify the manufacturing process.

Meanwhile, the portion where the pipe part 200 is accommodated in the pipe coupling portion 140 is formed in a plate shape, so that the contact area between the pipe body 210 and the heat dissipation body 110 can increase. Accordingly, heat transfer efficiency between the pipe part 200 and the heat dissipation body 110 can be improved.

This can also minimize the components for forming the passage of the heat transfer medium and receiving heat generated from the battery (not illustrated) or the power supply interruption unit 10, thereby simplifying the overall structure of the cooling module 40 and reducing the size of the cooling module 30. Accordingly, even when the battery disconnect device 1 has a small size, sufficient cooling efficiency can be expected.

### 6. Description of cooling module 50 according to still another embodiment

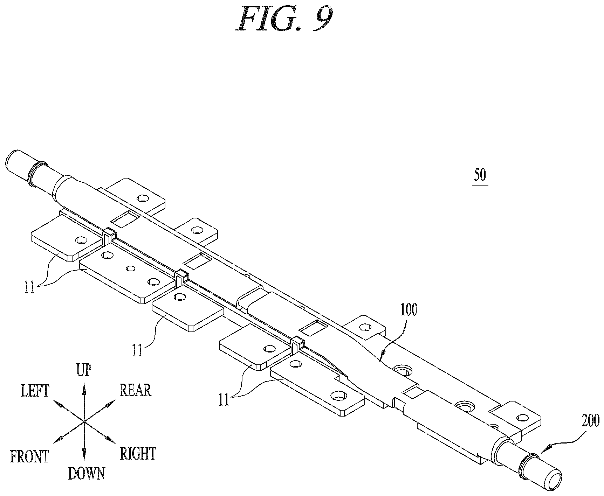

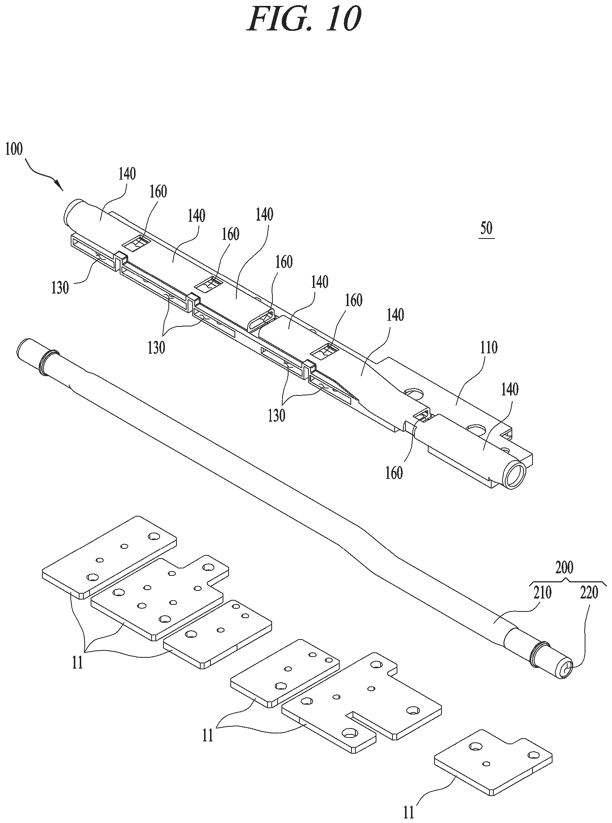

Referring to FIGS. 9 and 10, a cooling module 50 according to still another embodiment of the present disclosure is illustrated.

When compared to the cooling modules 20, 30, and 40 according to the previous embodiments, the cooling module 50 according to this embodiment has the same functions but has some differences in configuration. Therefore, in the following description, the cooling module 50 according to this embodiment will be described in detail, focusing on the configuration.

As described above, the cooling module 50 according to this embodiment may also constitute the battery disconnect device 10 by being coupled to the power supply interruption unit 10, in the same form as the cooling modules 20, 30 and 40 according to the previous embodiments. That is, as illustrated in FIG. 1, the cooling module 50 may be coupled to the power supply interruption unit 10 while covering the power supply interruption unit 10 from the upper side.

Accordingly, as illustrated in FIG. 9, one side, namely, a lower side facing the power supply interruption unit 10, of each side of the cooling module 50, may be in contact with the busbar 11 to exchange heat.

Compared to the cooling module 20 according to the previous embodiment, the cooling module 50 according to this embodiment is not provided with a component corresponding to the heat transfer part 300. Accordingly, it will be understood that a discharge path related to the heat transfer part 300 among the discharge paths of the heat generated from the battery (not illustrated) or the busbar 11 is not formed.

Additionally, compared to the cooling modules 20 and 30 according to the previous embodiments, the cooling module 50 according to this embodiment has a difference in the shape of the pipe part 200. As will be described later, the pipe part 200 may be formed to be partially flat. Accordingly, a contact area between the pipe part 200 and the heat dissipation part 100 can increase, thereby improving heat exchange efficiency.

Furthermore, compared to the cooling modules 20, 30, and 40 according to the previous embodiments, the cooling module 50 according to this embodiment does not have the fin member 120 on the heat dissipation part 100. Alternatively, the shape of the pipe coupling portion 140 disposed on the heat dissipation part 100 is configured differently.

In the illustrated embodiment, the cooling module 50 includes a heat dissipation part 100 and a pipe part 200.

The heat dissipation part 100 is coupled to the busbar 11 and receives heat generated from the busbar 11. Additionally, the heat dissipation part 100 is coupled to the pipe part 200 and transfers the received heat to the pipe part 200 and a heat transfer medium flowing within the pipe part 200.

The heat dissipation part 100 is coupled to the pipe part 200. The pipe coupling portion 140 to be described later may be formed outside the heat dissipation part 100, so that the pipe part 200 can be accommodated in communication with the outside.

The heat dissipation part 100 may be formed in a shape corresponding to the shape of the cooling module 50. In the illustrated embodiment, the heat dissipation part 100 has a rectangular pillar shape with a length in the left-to-right direction, a width in the front-to-rear direction, and a thickness in the vertical direction. It will be understood that the shape of the heat dissipation part 100 may change to correspond to the shape of the power supply interruption unit 10.

The conditions and properties of the material forming the heat dissipation part 100 according to this embodiment are the same as those of the heat dissipation part 100 disposed in the cooling modules 20, 30 and 40 according to the previous embodiments. Accordingly, the description of the material of the heat dissipation part 100 will be replaced with the foregoing description.

At this time, the heat dissipation part 100 and the pipe part 200 may be coupled to each other through a single process. In an embodiment in which the heat dissipation part 100 is formed of a material containing synthetic resin, after the disposition of the pipe part 200 is completed, a material forming the heat dissipation part 100 may be insert-molded to form the cooling module 50.

That is, in the above embodiment, the cooling module 50 may be manufactured by insert-molding.

Therefore, any separate component is not required to couple each component, that is, the heat dissipation part 100 and the pipe part 200 of the cooling module 50, and maintain the coupled state. This can reduce manufacturing cost and time by virtue of the reduction of the number of components.

Furthermore, the heat dissipation part 100 and the pipe part 200 may be coupled in close contact with one another, thereby improving airtightness and heat transfer efficiency.

In addition, since there is no need to form a space for accommodating the heat transfer part 300 inside the heat dissipation part 100, the size of the heat dissipation part 100 can be reduced.

Additionally, the pipe part 200 is maintained coupled to the heat dissipation part 100, and the heat transfer medium flows only inside the pipe part 200. Therefore, no separate configuration is required to suppress arbitrary leakage of the heat transfer medium.

This can result in improving cooling efficiency by the heat transfer medium while simplifying the structure of the cooling module 50. It will be understood that the cooling module 50 according to this embodiment can be disposed in a small battery disconnect device 1, compared to the cooling module 20 according to the previous embodiment.

In the illustrated embodiment, the heat dissipation part 100 includes a heat dissipation body 110, a busbar coupling portion 130, a pipe coupling portion 140, and a heat dissipation opening 160.

As described above, the cooling module 50 may be manufactured by insert-molding. In the embodiment, any separate component is not required to couple the pipe part 200 to the heat dissipation part 100 and maintain the coupled state.

Accordingly, among components of the heat dissipation part 100 to be described below, components, that is, the busbar coupling portion 130, the pipe coupling portion 140, and the heat dissipation opening 160 for coupling with other members are not formed separately but are manufactured together with the heat dissipation body 110 by insert-molding. This can reduce manufacturing cost and time by virtue of the reduction of the number of components.

Accordingly, it will be understood that the illustrated embodiment is in a disassembled state for explanation of the structure, under assumption that the manufacturing of the heat dissipation part 100 by insert-molding and the coupling of the heat dissipation part 100 with the pipe part 200 have been completed.

The heat dissipation body 110 defines the body of the heat dissipation part 100. A space is formed inside the heat dissipation body 110 to accommodate the busbar 11 and the pipe part 200.

The heat dissipation body 110 extends in an extending direction of the heat dissipation part 100, namely, in the left -to-right direction in the illustrated embodiment. The extending direction of the heat dissipation body 110 may be determined to correspond to the extending direction of the pipe part 200. Additionally, the extending direction of the heat dissipation body 110 may be determined to correspond to a direction in which the plurality of busbars 11 are disposed side by side to be spaced apart from one another.

The busbar coupling portion 130 is disposed inside the heat dissipation body 110.

The busbar coupling portion 130 is a space in which the busbar 11 is accommodated. The busbar coupling portion 130 is formed inside the heat dissipation body 110, so that the busbar 11 accommodated in the busbar coupling portion 130 can be in contact with the heat dissipation body 110. Due to the contact, generated heat may be transferred from the busbar 11 to the heat dissipation body 110.

The busbar coupling portion 130 is located on another side, facing the power supply interruption unit 10, of each side of the heat dissipation body 110, namely, on a lower side in the illustrated embodiment. The busbar coupling portion 130 is located opposite to the pipe coupling portion 140.

The busbar coupling portion 130 may have a length corresponding to the shape of the busbar 11. In the illustrated embodiment, the busbar 11 is formed in a rectangular plate shape, and thus the busbar coupling portion 130 may also be formed as a rectangular plate-shaped space with a rectangular cross-section and a thickness in the vertical direction.

The busbar coupling portion 130 may be provided in plurality. The plurality of busbar coupling portions 130 may be spaced apart from one another and disposed side by side along the extending direction of the heat dissipation body 110. Accordingly, the plurality of busbars 11 may be respectively accommodated in the plurality of busbar coupling portions 130, to be physically and electrically spaced apart from one another.

At this time, the plurality of busbar coupling portions 130 may be formed to correspond to the shape of the busbars 11 accommodated therein.

That is, some of the plurality of busbar coupling portions 130 may be formed through the heat dissipation body 110 along a width direction of the heat dissipation body 110, namely, in the front-to-rear direction in the illustrated embodiment. Some other of the plurality of busbar coupling portions 130 may be recessed in one of surfaces of the heat dissipation body 110 in the width direction, that is, in the front or rear surface in the illustrated embodiment.

In any case, it is sufficient if the accommodated busbar 11 is stably supported and can be physically and electrically spaced apart from other busbars 11.

The pipe coupling portion 140 is located on one side, which is opposite to the busbar coupling portion 130 among sides of the heat dissipation body 110, namely, on an upper side in the illustrated embodiment.

The pipe coupling portion 140 accommodates the pipe part 200. The pipe coupling portion 140 is formed outside the heat dissipation body 110. In the illustrated embodiment, the pipe coupling portion 140 is located on one side, namely, upper side opposite to the busbar coupling portion 130. The pipe coupling portion 140 may extend in a longitudinal direction of the heat dissipation body 110, namely, in the left-to-right direction in the illustrated embodiment. At this time, an extension length of the pipe coupling portion 140 may be shorter than an extension length of the heat dissipation body 110 or the pipe part 200.

The pipe coupling portion 140 may be formed to partially surround the accommodated pipe part 200. The pipe coupling portion 140 may be formed to partially surround a portion, which is not surrounded by the heat dissipation body 110, of each side of the pipe part 200, namely, partially surround upper, front, and rear sides in the illustrated embodiment.

The pipe coupling portion 140 may have any shape capable of accommodating the pipe part 200. As described above, the pipe part 200 disposed in the cooling module 50 according to this embodiment is formed such that a portion of the pipe body 210 is flat.

Accordingly, in the illustrated embodiment, the pipe coupling portion 140 extends in the left-to-right direction to correspond to the shape of the pipe part 200, and each end portion of the pipe coupling portion 140 has a circular cross-section and a portion between the end portions of the pipe coupling portion 140 has a plate-shaped cross section.

Accordingly, a contact area between the inner periphery of the heat dissipation body 110 surrounding the pipe coupling portion 140 and the pipe body 210 can increase, thereby improving heat exchange efficiency.

The pipe coupling portion 140 may be provided in plurality. The plurality of pipe coupling portions 140 may be spaced apart from one another and disposed side by side along the extending direction of the heat dissipation body 110 or the pipe part 200. The plurality of pipe coupling portions 140 may be configured to surround different portions, respectively, along the extending direction of the pipe part 200.

At this time, among the plurality of pipe coupling portions 140, a distance between a pair of pipe coupling portions 140, which are located on end portions in a disposition direction thereof, may be shorter than an extension length of the pipe part 200. Accordingly, each end portion in the extending direction of the pipe part 200 may be exposed to the outside of the pipe coupling portion 140 and communicate with the outside.

A space formed by the plurality of pipe coupling portions 140 spaced apart from each other may be defined as the heat dissipation opening 160.

The heat dissipation opening 160 is an open space in which the pipe part 200 coupled to and accommodated in the pipe coupling portion 140 is exposed to the outside. Heat transferred to the pipe part 200 may be discharged to the outside through the heat dissipation opening 160.

The heat dissipation opening 160 is defined by a pair of pipe coupling portions 140, which are located adjacent to each other at a spacing therebetween, among the plurality of pipe coupling portions 140. In other words, the pair of pipe coupling portions 140 adjacent to each other are disposed to face each other with the heat dissipation opening 160 interposed therebetween.

The heat dissipation opening 160 may be defined in plurality. As described above, the plurality of pipe coupling portions 140 are disposed to be spaced apart from one another along the extending direction of the pipe part 200. Accordingly, the plurality of heat dissipation openings 160 may also be disposed to be spaced apart from one another along the extending direction of the pipe part 200.

At this time, the heat dissipation opening 160 may alternatively be formed by penetrating one surface of the pipe coupling portion 140, namely, an upper surface in the illustrated embodiment. That is, as illustrated in FIGS. 9 and 10, the heat dissipation opening 160 may be formed through the inside of the one surface of the pipe coupling portion 140 in the thickness direction.

Accordingly, a path through which heat transferred to the pipe part 200 is dissipated to the outside can increase, so heat dissipation efficiency can be improved. In addition, even when the fin member 120 is not separately provided, a sufficient path through which the transferred heat is dissipated can be secured.

Referring back to FIGS. 9 and 10, the cooling module 50 according to the illustrated embodiment includes the pipe part 200.

The pipe part 200 forms a passage through which a heat transfer medium flows, and here, the heat transfer medium receives heat generated from the battery (not illustrated) or the power supply interruption unit 10 and dissipates the received heat to the outside. The inside of the pipe part 200 communicates with the outside of the battery disconnect device 1, but is blocked from communication with the inside of the battery disconnect device 1.

This can suppress damage to other components of the battery disconnect device 1 by the heat transfer medium flowing inside the pipe part 200. As a result, the occurrence of electrical accidents caused by the heat transfer medium can be suppressed.

The pipe part 200 is coupled to the heat dissipation part 100. Specifically, the pipe part 200 is accommodated in a space formed between the heat dissipation body 110 and the pipe coupling portion 140 of the heat dissipation part 100. The outer periphery of the pipe part 200 accommodated in the pipe coupling portion 140 may be in contact with the inner periphery of the heat dissipation body 110 and the pipe coupling portion 140 surrounding the space.

Accordingly, the heat generated from the busbar 11 can be transferred to the pipe part 200 through the heat dissipation body 110. The transferred heat may be dissipated to the outside of the battery disconnect device 1 through the heat transfer medium flowing inside the pipe part 200.

In addition, as described above, the plurality of pipe coupling portions 140 are disposed to be spaced apart from one another along the extending direction of the pipe part 200. The space formed between the adjacent pipe coupling portions 140 is defined as the heat dissipation opening 160. The heat dissipation opening 160 may also be formed through the inside of the pipe coupling portion 140.

Accordingly, the pipe part 200 coupled to the pipe coupling portion 140 may be exposed to the outside through the plurality of heat dissipation openings 160. As a result, heat transferred to the pipe part 200 can be dissipated to the outside through the plurality of heat dissipation openings 160.

The pipe part 200 may extend long along the direction in which the heat dissipation body 110 extends. In the illustrated embodiment, the pipe part 200 extends long in the left-to-right direction. It will be understood that the extending direction of the pipe part 200 is the same as the extending direction of the profile of the power supply interruption unit 10.

In the illustrated embodiment, the pipe part 200 includes a pipe body 210 and a pipe hollow 220.

The pipe body 210 defines the body of the pipe part 200. The pipe body 210 may extend long in the extending direction, namely, in the left-to-right direction in the illustrated embodiment. Each end portion of the pipe body 210 in the extending direction may be exposed to the outside of the heat dissipation body 110 and communicate with the outside.

The pipe body 210 may be formed in any shape capable of forming a passage for the heat transfer medium through the pipe hollow 220 formed therein. In the illustrated embodiment, the pipe body 210 extends in the left-to-right direction, such that each end portion in the extending direction has a circular cross-section, and a portion between the end portions has a rectangular cross-section with a width in the front-to-rear direction and a thickness in the vertical direction.

Accordingly, the cross-sectional area of each end portion of the pipe body 210 is formed to be larger than the cross-sectional area of the portion between the end portions. On the other hand, the area of the outer peripheral surface of the portion between the end portions of the pipe body 210 is formed to be larger than the area of the outer peripheral surface of each end portion.

Accordingly, the contact area between the pipe body 210 and the heat dissipation body 110 or the pipe coupling portion 140 can increase, thereby improving heat exchange efficiency.

The pipe body 210 may be formed of a material with high thermal conductivity. This is to quickly receive the generated heat and quickly transfer it to the heat transfer medium flowing in the pipe body.

The pipe body 210 may be formed of an electrically insulating material. This is to suppress arbitrary electrical connection with the busbar 11, which is accommodated in the heat dissipation body 110 together with the pipe body 210.

The pipe body 210 may be formed of a material with water resistance. In an embodiment in which the heat transfer medium is water, this is to suppress corrosion by the heat transfer medium.

In one embodiment, the pipe body 210 may be formed of aluminum or a metal alloy material containing aluminum.

The pipe hollow 220 is formed inside the pipe body 210.

The pipe hollow 220 is a space through which the heat transfer medium flows. The pipe hollow 220 is formed through the inside of the pipe body 210 along the longitudinal direction of the pipe body 210. In the illustrated embodiment, the pipe hollow 220 is formed through the pipe body 210 in the left-to-right direction which is the same as the extending direction of the pipe body 210.

Each end portion of the pipe hollow 220, namely, right and left end portions in the illustrated embodiment are open. The pipe hollow 220 may communicate with the outside through the respective end portions. That is, the heat transfer medium may flow into the pipe hollow 220 through any one of the end portions, and may flow out of the pipe hollow 220 through the other end portion.

The pipe hollow 220 may have any shape which is open to communicate with the outside such that the heat transfer medium can flow. In the illustrated embodiment, the pipe body 220 extends in the left-to-right direction, such that each end portion in the extending direction has a circular cross-section, and a portion between the end portions has a rectangular cross-section with a width in the front-to-rear direction and a thickness in the vertical direction. It will be understood that the shape of the pipe hollow 220 corresponds to the shape of the pipe body 210.

The cooling module 50 according to one embodiment of the present disclosure described above can dissipate heat generated from the battery (not illustrated) or the busbar 11 to the outside through various paths.

Specifically, the busbar 11 may be accommodated in the busbar coupling portion 130 of the heat dissipation part 100, and the generated heat may be transferred to the heat dissipation body 110.

The plurality of heat dissipation openings 160 are formed on the outer periphery of the heat dissipation body 110 on one side thereof, namely, on an upper side in the illustrated embodiment. A part of the heat transferred to the portion of the heat dissipation body 110, that is, the portion surrounding the busbar coupling portion 130 may be dissipated to the outside through the plurality of heat dissipation openings 160.

The pipe part 200 is accommodated in the pipe coupling portion 140 formed inside the heat dissipation body 110. The pipe part 200 is disposed so that its outer periphery is in contact with the inner periphery of the heat dissipation body 110.

Accordingly, another part of the heat transferred to the portion of the heat dissipation body 110 can be transferred to the pipe part 200. A part of the heat transferred to the pipe part 200 may be dissipated to the outside through the heat transfer medium or may be dissipated to the outside through the heat dissipation opening 160 via the heat dissipation body 110 again.

At this time, the heat transfer medium flows only in the pipe hollow 220. That is, until the heat transfer medium flows in from the outside of the cooling module 50 and then flows out after heat exchange, the heat transfer medium does not leak or flow to the outside of the pipe part 200.

Therefore, arbitrary leakage of the heat transfer medium can be suppressed even if a separate member is not disposed.

Additionally, the heat dissipation part 100 and the pipe part 200 may be coupled in close contact by insert-molding. Accordingly, separate members and processes for coupling the heat dissipation part 100 and the pipe part 200 are not required, which can reduce manufacturing costs and simplify the manufacturing process.

Meanwhile, the portion where the pipe part 200 is accommodated in the pipe coupling portion 140 is formed in a plate shape, so that the contact area between the pipe body 210 and the heat dissipation body 110 can increase. Accordingly, heat transfer efficiency between the pipe part 200 and the heat dissipation body 110 can be improved.

This can also minimize the configuration for forming the passage of the heat transfer medium and receiving heat generated from the battery (not illustrated) or the power supply interruption unit 10, thereby simplifying the overall structure of the cooling module 50 and reducing the size of the cooling module 30. Accordingly, even when the battery disconnect device 1 has a small size, sufficient cooling efficiency can be expected.

Although the embodiment of the present disclosure has been described, the idea of the present disclosure is not limited to the embodiment presented in this disclosure, and those skilled in the art who understand the scope of the present disclosure can easily propose other embodiments by addition, change, deletion, etc. of components within the scope of the same technical idea, but it should be understood that those addition, change, deletion, etc. are embraced within the technical idea of the present disclosure.

### [Description of Reference Numerals]

1: Battery disconnect device 10: Power supply interruption unit
11: Busbar 12: Contactor
13: Fuse 20, 30, 40, 50: Cooling module
100: Heat dissipation part 110: Heat dissipation body
120: Fin member 130: Busbar coupling portion
140: Pipe coupling portion 150: Transfer coupling portion
160: Heat dissipation opening 200: Pipe part
210: Pipe body 220: Pipe hollow
300: Heat transfer part 310: Transfer body
320: Pipe accommodating portion

## Claims

1. A cooling module comprising:
a heat dissipation part that is coupled to an external busbar and receives heat from the busbar; and
a pipe part that is coupled to the heat dissipation part and in which a heat transfer medium receiving the heat flows,
wherein the heat dissipation part comprises:
a heat dissipation body that extends in one direction;
a pipe coupling portion that extends along the one direction inside the heat dissipation body, and has each end portion in the one direction open such that the pipe part is coupled therethrough; and
a busbar coupling portion that is located adjacent to the pipe coupling portion and to which the busbar is coupled.

2. The cooling module of claim 1, wherein the heat dissipation part is made of thermal conductive plastic or thermal conductive rubber.

3. The cooling module of claim 2, wherein the heat dissipation part is formed of a material having thermal conductivity of 0.5 W/mK or more.

4. The cooling module of claim 3, wherein the heat dissipation part is formed of a material having thermal conductivity of 2.0 W/mK or more.

5. The cooling module of claim 1, wherein the heat dissipation part and the pipe part are manufactured by insert-molding.

6. The cooling module of claim 1, wherein the heat dissipation part comprises a fin member that is located on one side of the heat dissipation body to be opposite to the busbar coupling portion, and protrudes externally to increase a surface area.

7. The cooling module of claim 6, wherein the fin member is provided in plurality, and the plurality of fin members are disposed to be spaced apart from one another in the one direction.

8. The cooling module of claim 1, wherein the pipe part is formed such that a shape of a cross-section of each end portion in an extending direction thereof is different from a shape of a cross-section of a portion between the end portions, and
the end portions are exposed to outside of the heat dissipation body, and the portion between the end portions is accommodated in the pipe coupling portion.

9. The cooling module of claim 8, wherein the shape of the cross-section of each end portion of the pipe part is circular, and
the shape of the cross-section of the portion between the end portions is formed in a plate shape with a thickness smaller than a diameter of the cross-section of each end portion.

10. The cooling module of claim 1, wherein the pipe part is formed such that an area of an outer peripheral surface of each end portion in an extending direction thereof is smaller than an area of an outer peripheral surface of a portion between the end portions, and
the end portions are exposed to outside of the heat dissipation body, and the portion between the end portions is accommodated in the pipe coupling portion.

11. The cooling module of claim 1, further comprising a heat transfer part that is coupled to each of the heat dissipation part and the pipe part and is configured to exchange heat with the heat dissipation part and the pipe part, and
wherein the heat dissipation part comprises a transfer coupling portion that extends along the one direction inside the heat dissipation body, is located between the busbar coupling portion and the pipe coupling portion, and accommodates the heat transfer part.

12. The cooling module of claim 11, wherein the heat transfer part comprises:
a transfer body that extends along the one direction and is in contact with the heat dissipation body to exchange heat; and
a pipe accommodating portion that is recessed in one surface of the transfer body and extends along the one direction to accommodate the pipe part, and
the pipe part is in contact with a surface, surrounding the pipe accommodating portion, of surfaces of the transfer body, so as to exchange heat.

13. A cooling module comprising:
a heat dissipation part that is coupled to an external busbar and receives heat from the busbar; and
a pipe part that is coupled to the heat dissipation part and in which a heat transfer medium receiving the heat flows,
wherein the heat dissipation part comprises:
a heat dissipation body that extends in one direction to surround one side of the pipe part;
a pipe coupling portion that is located on one surface of the heat dissipation body, extends along the one direction by a length shorter than the heat dissipation body, and surrounds another side of the pipe part; and
a heat dissipation opening that is formed through the pipe coupling portion to form a passage through which the pipe part is exposed to outside.

14. The cooling module of claim 13, wherein the pipe coupling portion is provided in plurality, and the plurality of pipe coupling portions are disposed to be spaced apart from one another along the one direction, and
the heat dissipation opening is further formed between a pair of pipe coupling portions, located adjacent to each other, among the plurality of pipe coupling portions.

15. A battery disconnect device comprising:
a plurality of contactors each of which is electrically connected to an external power source and an external load and that are disposed side by side in one direction;
a plurality of busbars that are electrically connected to the plurality of contactors, respectively;
a heat dissipation part that is coupled to the plurality of busbars and receives heat from the busbars; and
a pipe part that is coupled to the heat dissipation part and in which a heat transfer medium receiving the heat flows,
wherein the heat dissipation part comprises:
a heat dissipation body that extends in the one direction;
a pipe coupling portion that extends along the one direction inside the heat dissipation body, and has each end portion in the one direction open such that the pipe part is coupled therethrough; and
a plurality of busbar coupling portions that are formed on the heat dissipation body, and located adjacent to the pipe coupling portion, and to which the plurality of the busbars are coupled.

16. The battery disconnect device of claim 15, wherein the external power source is a battery disposed in an electric vehicle.
